(19) Europäisches Patentamt / European Patent Office / Office européen des brevets

(11) **EP 3 918 695 B1**

(12) **EUROPÄISCHE PATENTSCHRIFT**

(45) Veröffentlichungstag und Bekanntmachung des Hinweises auf die Patenterteilung:
**30.10.2024 Patentblatt 2024/44**

(21) Anmeldenummer: **20702110.6**

(22) Anmeldetag: **24.01.2020**

(51) Internationale Patentklassifikation (IPC):
**H02K 3/12** *(2006.01)*    **H02K 3/50** *(2006.01)*

(52) Gemeinsame Patentklassifikation (CPC):
**H02K 3/12; B60L 53/24; B60L 58/18; H02K 3/28; H02K 3/50;** B60L 2220/54; B60L 2220/56; B60L 2220/58; Y02T 10/64; Y02T 10/70; Y02T 10/7072; Y02T 90/14

(86) Internationale Anmeldenummer:
**PCT/EP2020/051802**

(87) Internationale Veröffentlichungsnummer:
**WO 2020/156957 (06.08.2020 Gazette 2020/32)**

(54) **ELEKTRISCHER ANTRIEB UND VERFAHREN ZUM BETREIBEN DES ELEKTRISCHEN ANTRIEBS**

ELECTRIC DRIVE AND METHOD FOR OPERATING THE ELECTRIC DRIVE

ENTRAÎNEMENT ÉLECTRIQUE ET PROCÉDÉ SERVANT À FAIRE FONCTIONNER L'ENTRAÎNEMENT ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2019 DE 102019102351**

(43) Veröffentlichungstag der Anmeldung:
**08.12.2021 Patentblatt 2021/49**

(73) Patentinhaber: **MOLABO GmbH
85521 Ottobrunn (DE)**

(72) Erfinder:
• **MOROS, Oleg
  85737 Ismaning (DE)**
• **BACHHEIBL, Florian
  80799 München (DE)**
• **PATZAK, Adrian
  85653 Aying (DE)**
• **RUBEY, Benjamin
  81739 München (DE)**

(74) Vertreter: **Bardehle Pagenberg Partnerschaft mbB
Patentanwälte Rechtsanwälte
Prinzregentenplatz 7
81675 München (DE)**

(56) Entgegenhaltungen:
WO-A1-2019/016203    DE-A1- 102005 032 965
DE-B3- 102017 116 145    US-A1- 2016 028 284
US-A1- 2016 173 019

**Beschreibung**

Die vorliegende Anmeldung betrifft einen elektrischen Antrieb, ein Versorgungssystem für den elektrischen Antrieb und ein Verfahren zum Betreiben des elektrischen Antriebs.

Der elektrische Antrieb kann eine elektrische Maschine umfassen, welche einen Stator und einen relativ dazu beweglich gelagerten Rotor aufweist. Elektrische Maschinen können motorisch oder generatorisch betrieben werden. Der Stator kann eine elektrische Wicklung in Nuten umfassen, welche aus einem elektrisch leitfähigen Material gebildet ist und zum Beispiel die Form von Stäben aufweist. Die elektrische Wicklung wird an eine Stromversorgungseinheit angeschlossen, welche mehrphasig sein kann.

Bei einer hohen Anzahl von elektrischen Phasen des Stators ist der Herstellungsaufwand des Stators wesentlich erhöht. Zur Herstellung des Stators ist es nötig die elektrisch leitfähigen Stäbe passgenau in den Nuten des Stators zu positionieren. Je mehr elektrische Phasen der Stator aufweist, desto aufwendiger ist das passgenaue Einbringen der Stäbe in die Nuten.

In DE 102017116145 B3 wird eine elektrische Maschine mit einem ersten Kurzschlussmittel und einem zweiten Kurzschlussmittel beschrieben. Jeweils zwei Leiterabschnitte der Statorwicklung sind mit einer Halbbrücke verbunden.

In US 2016/028284 A1 wird eine elektrische Maschine mit zwei Teil-Kurzschlussringen beschrieben. Angrenzend an die Teil-Kurzschlussringe ist eine Kühlung angeordnet.

In DE 102005032965 A1 wird ein Stromrichtermotor beschrieben. Jeweils eine Gruppe von Leitern der Statorwicklung ist mit einem gemeinsamen Halbleiterschalter verbunden.

In US 2016/0173019 A1 wird eine Energieversorgungseinheit für eine elektrische Maschine beschrieben.

Eine zu lösende Aufgabe besteht darin, einen elektrischen Antrieb anzugeben, welcher effizient hergestellt werden kann. Eine weitere zu lösende Aufgabe besteht darin, ein Versorgungssystem, welches effizient betrieben werden kann, für den elektrischen Antrieb anzugeben. Eine weitere zu lösende Aufgabe besteht darin ein effizientes Verfahren zum Betreiben des elektrischen Antriebs anzugeben.

Die Aufgaben werden durch die Gegenstände der unabhängigen Patentansprüche gelöst. Vorteilhafte Ausgestaltungen und Weiterbildungen sind in den Unteransprüchen angegeben.

Gemäß zumindest einer Ausführungsform des elektrischen Antriebs umfasst der elektrische Antrieb eine elektrische Maschine. Die elektrische Maschine umfasst einen Stator und einen beweglich zum Stator gelagerten Rotor. Der Rotor kann beispielsweise durch einen Käfigläufer, einen Rotor mit Permanentmagneten, einen fremderregten Synchronrotor, einen Rotor für eine geschaltete Reluktanzmaschine, einen Rotor für einen Synchronreluktanzmotor oder eine Kombination der genannten gebildet sein. Bei dem Rotor kann es sich um einen Innenläufer oder einen Außenläufer handeln. Zwischen dem Stator und dem Rotor kann ein Luftspalt angeordnet sein. Der Stator kann die Form eines Hohlzylinders aufweisen.

Der elektrische Antrieb kann in einem Fahrzeug oder einem Flugzeug angeordnet sein. Bei dem Fahrzeug kann es sich um ein Landfahrzeug, um ein Wasserfahrzeug oder um ein Luftfahrzeug handeln.

Der Stator weist mindestens zwei erste Leiterabschnitte und mindestens zwei zweite Leiterabschnitte auf. Die ersten und zweiten Leiterabschnitte können ein elektrisch leitfähiges Material aufweisen, wie zum Beispiel Kupfer oder Aluminium. Der Stator kann Nuten aufweisen, in welchen sich je ein Leiterabschnitt befindet. Der Stator kann ein oder mehrere Statorblechpakete umfassen, in welchen die Nuten eingebracht sind. Bevorzugt weist der Stator eine Vielzahl von Nuten auf.

Ein Kern des Stators kann ein magnetisches Material wie beispielsweise Eisen, Stahl oder Pulververbundwerkstoffe (soft magnetic composites) aufweisen. Bei den ersten und zweiten Leiterabschnitten kann es sich zum Beispiel um elektrisch leitfähige Stäbe handeln. Die ersten und zweiten Leiterabschnitte können parallel zueinander verlaufen. Die ersten und zweiten Leiterabschnitte können sich geradlinig durch den Stator erstrecken. Außerdem können die ersten und zweiten Leiterabschnitte gleiche Abstände zwischen einander aufweisen.

Die Anzahl der ersten Leiterabschnitte kann gleich der Anzahl der zweiten Leiterabschnitte sein. Das bedeutet, der Stator kann genauso viele erste Leiterabschnitte wie zweite Leiterabschnitte aufweisen. Alternativ ist es möglich, dass die Anzahl der ersten Leiterabschnitte größer oder kleiner als die Anzahl der zweiten Leiterabschnitte ist. Die ersten und zweiten Leiterabschnitte können gleichmäßig oder symmetrisch entlang des Umfangs des Stators angeordnet sein. Alternativ ist es möglich, dass die ersten und zweiten Leiterabschnitte ungleichmäßig oder unsymmetrisch entlang des Umfangs des Stators angeordnet sind.

Die ersten und zweiten Leiterabschnitte können zylinderförmig entlang des Umfangs des Stators angeordnet sein. Somit können sich die ersten und zweiten Leiterabschnitte von einer ersten Seite des Stators zu einer zweiten Seite des Stators erstrecken. Die ersten und zweiten Leiterabschnitte können einen Käfig bilden. In diesem Fall kann es sich bei der elektrischen Maschine um eine Radialflussmaschine handeln.

Es ist weiter möglich, dass die ersten und zweiten Leiterabschnitte sternförmig angeordnet sind. Das kann bedeuten, dass sich die ersten und zweiten Leiterabschnitte von einem Mittelpunkt des Stators aus radial zu einer Außenseite des Stators erstrecken. In diesem Fall kann es sich bei der elektrischen Maschine um eine Axialflussmaschine handeln. Das bedeutet, der Stator kann anstelle von Statorblechpaketen Pulververbundwerkstoffe (soft magnetic composites) aufweisen.

Der Stator weist weiter mindestens ein erstes Kurzschlussmittel und mindestens ein zweites Kurzschlussmittel auf. Das erste und das zweite Kurzschlussmittel können ein elektrisch leitfähiges Material aufweisen. Zum Beispiel handelt es sich bei dem ersten und/oder bei dem zweiten Kurzschlussmittel um einen Kurzschlussring. Das erste und das zweite Kurzschlussmittel können an einer ersten Seite des Stators angeordnet sein. Das erste Kurzschlussmittel und das zweite Kurzschlussmittel können in direktem Kontakt sein. Es ist weiter möglich, dass das erste Kurzschlussmittel und das zweite Kurzschlussmittel beabstandet zueinander angeordnet sind. In diesem Fall sind das erste Kurzschlussmittel und das zweite Kurzschlussmittel nicht in direktem Kontakt miteinander. Das erste Kurzschlussmittel und das zweite Kurzschlussmittel können jeweils die Form eines Kreises aufweisen. Alternativ ist es möglich, dass das erste Kurzschlussmittel und das zweite Kurzschlussmittel jeweils die Form eines Ringsegments aufweisen.

Die ersten Leiterabschnitte sind elektrisch mit dem ersten Kurzschlussmittel verbunden. Die ersten Leiterabschnitte können derart mit dem ersten Kurzschlussmittel verbunden sein, dass sie einen Kurzschluss bilden. Die ersten Leiterabschnitte können an der ersten Seite des Stators elektrisch mit dem ersten Kurzschlussmittel verbunden sein. Es ist weiter möglich, dass die ersten Leiterabschnitte mechanisch mit dem ersten Kurzschlussmittel verbunden sind.

Die zweiten Leiterabschnitte sind elektrisch mit dem zweiten Kurzschlussmittel verbunden. Die zweiten Leiterabschnitte können derart mit dem zweiten Kurzschlussmittel verbunden sein, dass sie einen Kurzschluss bilden. Die zweiten Leiterabschnitte können an der ersten Seite des Stators elektrisch mit dem zweiten Kurzschlussmittel verbunden sein. Es ist weiter möglich, dass die zweiten Leiterabschnitte mechanisch mit dem zweiten Kurzschlussmittel verbunden sind.

Weiter ist es möglich, dass das erste Kurzschlussmittel an der ersten Seite des Stators angeordnet ist und das zweite Kurzschlussmittel an der zweiten Seite des Stators oder umgekehrt. Das bedeutet, das erste Kurzschlussmittel und das zweite Kurzschlussmittel können an der gleichen Seite des Stators oder an unterschiedlichen Seiten des Stators angeordnet sein.

Die ersten Leiterabschnitte und die zweiten Leiterabschnitte sind jeweils dazu ausgelegt mit einer jeweils eigenen elektrischen Phase versorgt zu werden. Das kann bedeuten, dass die ersten Leiterabschnitte und die zweiten Leiterabschnitte jeweils separat angesteuert werden können. Das heißt, jeder der ersten Leiterabschnitte und jeder der zweiten Leiterabschnitte kann separat angesteuert werden. Die ersten Leiterabschnitte können abgesehen vom ersten Kurzschlussmittel elektrisch voneinander isoliert sein. Die zweiten Leiterabschnitte können abgesehen vom zweiten Kurzschlussmittel elektrisch voneinander isoliert sein. Die ersten Leiterabschnitte können elektrisch von den zweiten Leiterabschnitten isoliert sein. Die ersten Leiterabschnitte und die zweiten Leiterabschnitte können dazu ausgelegt sein mit einem jeweils eigenen Phasenstrom gespeist zu werden. Das bedeutet, jeder der ersten Leiterabschnitte und jeder der zweiten Leiterabschnitte kann dazu ausgelegt sein mit einem jeweils eigenen Phasenstrom gespeist zu werden. Die verschiedenen Phasenströme können von einer Leistungselektronik bereitgestellt werden.

Die ersten Leiterabschnitte und die zweiten Leiterabschnitte können jeweils an eine eigene Halbbrücke angeschlossen sein, welche dazu ausgelegt ist, jeden der Leiterabschnitte mit einem eigenen Phasenstrom zu speisen. Dazu können die ersten Leiterabschnitte und die zweiten Leiterabschnitte jeweils über eine eigene Halbbrücke mit einer Stromversorgungseinheit verbunden sein. Die Phasenströme können phasenverschoben zueinander sein. Alternativ sind nur einige der Phasenströme phasenverschoben zueinander und einige der Phasenströme sind nicht phasenverschoben zueinander. Das kann bedeuten, dass die Phasenströme in Gruppen aufgeteilt sind, wobei die Phasenströme einer Gruppe gleichphasig sind und die Phasenströme verschiedener Gruppen phasenverschoben zueinander sind. Außerdem können die Phasenströme verschiedene Amplituden aufweisen. Die ersten Leiterabschnitte und die zweiten Leiterabschnitte können an einer zweiten Seite des Stators, welche an einer Seite des Stators angeordnet ist, die der ersten Seite abgewandt ist, jeweils an eine eigene Halbbrücke angeschlossen sein. Durch das Speisen der ersten und zweiten Leiterabschnitte mit einem jeweils eigenen Phasenstrom können diese im Betrieb des elektrischen Antriebs ein Drehfeld oder mehrere Drehfelder erzeugen. Das Drehfeld oder die Drehfelder können dazu ausgelegt sein, einen Rotor der elektrischen Maschine anzutreiben. Die ersten Leiterabschnitte und die zweiten Leiterabschnitte können somit eine elektrische Wicklung des Stators bilden. Die Leistungselektronik kann die Halbbrücken umfassen.

Da die ersten Leiterabschnitte und die zweiten Leiterabschnitte jeweils separat angesteuert werden können, kann im Betrieb des elektrischen Antriebs eingestellt werden, welche Leiterabschnitte mit einem Phasenstrom versorgt werden. Das bedeutet, dass eingestellt werden kann, ob alle ersten Leiterabschnitte und alle zweiten Leiterabschnitte im Betrieb angesteuert werden oder ob einige der ersten Leiterabschnitte und/oder der zweiten Leiterabschnitte nicht mit einem Phasenstrom versorgt werden. Es ist weiter möglich, alle ersten Leiterabschnitte und/oder alle zweiten Leiterabschnitte im Betrieb des elektrischen Antriebs nicht anzusteuern. Das bedeutet, die Anzahl der im Betrieb genutzten Leiterabschnitte ist einstellbar. Dies ermöglicht einen effizienten Betrieb des elektrischen Antriebs in verschiedenen Betriebszuständen.

Die elektrisch leitfähigen Stäbe, welche die ersten und zweiten Leiterabschnitte bilden können, können vorteilhafterweise passgenau in Nuten im Stator eingefügt werden. Somit kann ein hoher Nutfüllfaktor erreicht werden. Außerdem werden keine Wickelköpfe an den Seiten des Stators benötigt. Dadurch wird insgesamt weniger Bauraum für den Stator benötigt.

Da der Stator mindestens ein erstes Kurzschlussmittel und mindestens ein zweites Kurzschlussmittel aufweist, sind insgesamt weniger Leiterabschnitte mit jeweils einem Kurzschlussmittel verbunden. Das bedeutet, bei gleichbleibender Gesamtanzahl von Leiterabschnitten im Stator ist beispielsweise die Anzahl der Leiterabschnitte, welche mit dem ersten Kurzschlussmittel verbunden ist, halb so groß wie die Gesamtanzahl der Leiterabschnitte im Stator. Weist der Stator mehr als ein erstes Kurzschlussmittel und/oder mehr als ein zweites Kurzschlussmittel auf, so kann die Anzahl von Leiterabschnitten pro Kurzschlussmittel weiter reduziert werden. Eine geringe Anzahl von Leiterabschnitten, welche mit einem Kurzschlussmittel verbunden sind, ist vorteilhaft bei der Herstellung des Stators.

Bei der Herstellung des Stators werden die elektrisch leitfähigen Leiterabschnitte in die Nuten des Stators eingebracht, so dass die Leiterabschnitte jeweils elektrisch vom umgebenden Material des Stators isoliert sind. Dabei werden die Leiterabschnitte entweder einzeln in die Nuten des Stators eingebracht oder mehrere Leiterabschnitte werden über ein Kurzschlussmittel mechanisch verbunden. Je größer die Anzahl der Leiterabschnitte, welche gleichzeitig in den Stator eingebracht werden, desto aufwendiger und fehleranfälliger ist der Herstellungsprozess. Beispielsweise kann eine elektrische Isolierung der Leiterabschnitte gegen das umgebende Material des Stators beschädigt werden. Außerdem wird für eine größere Anzahl von Leiterabschnitten, welche gleichzeitig in einen Stator eingebracht werden, eine größere Kraft benötigt. Durch die Verwendung von mindestens einem ersten Kurzschlussmittel und mindestens einem zweiten Kurzschlussmittel kann die Anzahl an Leiterabschnitten pro Kurzschlussmittel reduziert werden. Das bedeutet, zur Vereinfachung des Herstellungsprozesses weist der Stator mehrere Bestandteile auf, welche im Herstellungsprozess einfacher ineinander gefügt werden können.

Wenn die Leiterabschnitte einzeln in die Nuten eingebracht werden, werden diese anschließend über ein oder mehrere Kurzschlussmittel verbunden.

Die ersten Leiterabschnitte können vor dem Einbringen in den Stator mechanisch mit dem ersten Kurzschlussmittel verbunden sein. Die zweiten Leiterabschnitte können vor dem Einbringen in den Stator mechanisch mit dem zweiten Kurzschlussmittel verbunden sein. Das erste Kurzschlussmittel mit den ersten Leiterabschnitten und das zweite Kurzschlussmittel mit den zweiten Leiterabschnitten können jeweils einfacher und sicherer in den Stator eingebracht werden als ein Kurzschlussmittel, mit welchem alle Leiterabschnitte verbunden sind. Somit kann der elektrische Antrieb insgesamt effizienter hergestellt werden.

Des Weiteren weist der hier beschriebene elektrische Antrieb vorteilhafterweise mehr Freiheitsgrade im Aufbau auf und kann somit flexibler an verschiedene Anforderungen angepasst werden.

Gemäß zumindest einer Ausführungsform des elektrischen Antriebs weist der Stator mindestens drei erste Leiterabschnitte und mindestens drei zweite Leiterabschnitte auf. Somit kann der Stator ein Drehfeld erzeugen.

Gemäß zumindest einer Ausführungsform des elektrischen Antriebs sind die ersten Leiterabschnitte und die zweiten Leiterabschnitte jeweils mit einer eigenen Halbbrücke verbunden. Die Halbbrücken können an eine Batterie angeschlossen sein und dazu eingerichtet sein einen jeweils eigenen Phasenstrom bereitzustellen. Bei den Halbbrücken kann es sich zum Beispiel um bipolare elektronische Schalter handeln, wie zum Beispiel Metall-Oxid-Halbleiter-Feldeffekttransistoren (MOSFET) oder Bipolartransistoren (IGBT). Jede Halbbrücke ist einem ersten Leiterabschnitt oder einem zweiten Leiterabschnitt zugeordnet, so dass jede Halbbrücke mit einem ersten Leiterabschnitt oder einem zweiten Leiterabschnitt elektrisch verbunden ist. Die Halbbrücken können dazu eingerichtet sein den jeweils angeschlossenen Leiterabschnitt mit einem eigenen Phasenstrom zu versorgen. Die Batterie kann eine Gleichspannungsquelle sein. Außerdem kann die Batteriespannung höchstens 60 V betragen. In diesem Fall können die Halbbrücken zwei Schalter aufweisen, welche jeweils abwechselnd geöffnet und geschlossen werden, so dass an den Leiterabschnitten, welche mit den Halbbrücken verbunden sind, eine Wechselspannung anliegt. Dadurch dass an den Leiterabschnitten eine Wechselspannung angelegt wird, kann der Stator ein Drehfeld erzeugen.

Gemäß zumindest einer Ausführungsform des elektrischen Antriebs ist zwischen dem ersten Kurzschlussmittel und dem zweiten Kurzschlussmittel ein elektrisch isolierendes Material angeordnet. Das elektrisch isolierende Material kann vollständig zwischen dem ersten Kurzschlussmittel und dem zweiten Kurzschlussmittel angeordnet sein. Somit können das erste Kurzschlussmittel und das zweite Kurzschlussmittel elektrisch voneinander isoliert sein. Bei dem elektrisch isolierenden Material handelt es sich zum Beispiel und eine elektrisch isolierende Schicht oder um Luft.

Es ist weiter möglich, dass die Oberfläche des ersten und des zweiten Kurzschlussmittels chemisch behandelt ist, so dass die elektrisch leitfähigen Bereiche des ersten und des zweiten Kurzschlussmittels elektrisch voneinander isoliert sind.

Vorteilhafterweise ermöglicht eine Isolation des ersten und zweiten Kurzschlussmittels voneinander den Anschluss von externen Komponenten an das erste und das zweite Kurzschlussmittel.

Gemäß zumindest einer Ausführungsform des elektrischen Antriebs sind die ersten Leiterabschnitte und die zweiten Leiterabschnitte alternierend entlang des Umfangs des Stators angeordnet. Das kann bedeuten, dass ein erster Leiterabschnitt jeweils benachbart zu zwei zweiten Leiterabschnitten angeordnet ist. Ein erster Leiterabschnitt kann jeweils entlang des Umfangs des Stators zwischen zwei zweiten Leiterabschnitten angeordnet sein. Das bedeutet, die ersten Leiterabschnitte und die zweiten Leiterabschnitte sind abwechselnd entlang des Umfangs des Stators angeordnet. Jeder der ersten Leiterabschnitte kann benachbart zu zwei zweiten Leiterabschnitten angeordnet sein. Somit kann jeder der ersten Leiterabschnitte entlang des Umfangs des Stators zwischen zwei zweiten Leiterabschnitten angeordnet sein. Dabei kann der Stator genauso viele erste Leiterabschnitte wie zweite Leiterabschnitte aufweisen. Ein symmetrischer Aufbau des Stators vereinfacht die Herstellung des elektrischen Antriebs.

Das erste Kurzschlussmittel und das zweite Kurzschlussmittel sind entlang einer Rotationsachse des Rotors nebeneinander angeordnet. Die Rotationsachse des Rotors kann parallel zu einer Haupterstreckungsrichtung des Stators verlaufen. Dass das erste Kurzschlussmittel und das zweite Kurzschlussmittel entlang einer Rotationsachse des Rotors nebeneinander angeordnet sind, kann bedeuten, dass das erste Kurzschlussmittel und das zweite Kurzschlussmittel an verschiedenen Positionen entlang einer Achse, welche parallel zur Rotationsachse des Rotors verläuft, angeordnet sind. Das erste Kurzschlussmittel und das zweite Kurzschlussmittel können entlang einer Achse, welche parallel zur Rotationsachse des Rotors verläuft, übereinander angeordnet sein. Dabei können das erste Kurzschlussmittel und das zweite Kurzschlussmittel beide die Form eines Kreises aufweisen. Weiter können das erste Kurzschlussmittel oder das zweite Kurzschlussmittel Ausnehmungen aufweisen, durch welche sich die ersten oder die zweiten Leiterabschnitte erstrecken. Somit sind bei dieser Anordnung des ersten und des zweiten Kurzschlussmittels weiter die ersten Leiterabschnitte mit dem ersten Kurzschlussmittel verbunden und die zweiten Leiterabschnitte mit dem zweiten Kurzschlussmittel. Durch die Verwendung von mindestens einem ersten Kurzschlussmittel und mindestens einem zweiten Kurzschlussmittel kann der elektrische Antrieb vereinfacht hergestellt werden.

Gemäß zumindest einer Ausführungsform des elektrischen Antriebs sind das erste Kurzschlussmittel und das zweite Kurzschlussmittel in einem Querschnitt durch die elektrische Maschine nebeneinander angeordnet. Der Querschnitt durch die elektrische Maschine kann in einer Ebene verlaufen, welche senkrecht zur Rotationsachse des Rotors ist. Das erste Kurzschlussmittel und das zweite Kurzschlussmittel können beide die Form eines Kreissegments aufweisen. Die Kreissegmente können im Querschnitt durch die elektrische Maschine entlang eines Kreises angeordnet sein. Jedes der Kreissegmente ist mit einer geringeren Anzahl von Leiterabschnitten verbunden als ein Kurzschlussmittel, welches die Form eines ganzen Kreises aufweist. Somit ist die Herstellung des elektrischen Antriebs vereinfacht.

Gemäß zumindest einer Ausführungsform des elektrischen Antriebs sind das erste Kurzschlussmittel und das zweite Kurzschlussmittel entlang einer Rotationsachse des Rotors nebeneinander angeordnet und ein weiteres erstes Kurzschlussmittel und ein weiteres zweites Kurzschlussmittel sind in einem Querschnitt durch die elektrische Maschine nebeneinander angeordnet.

Gemäß zumindest einer Ausführungsform des elektrischen Antriebs ist die Anzahl der ersten Leiterabschnitte gleich der Anzahl der zweiten Leiterabschnitte. Somit können die ersten Leiterabschnitte und die zweiten Leiterabschnitte symmetrisch entlang des Umfangs des Stators verteilt sein. Vorteilhafterweise kann der Stator dabei ein symmetrisches Drehfeld erzeugen.

Gemäß zumindest einer Ausführungsform des elektrischen Antriebs ist die Anzahl der ersten Leiterabschnitte verschieden von der Anzahl der zweiten Leiterabschnitte. Beispielsweise kann die Anzahl der ersten Leiterabschnitte ein Vielfaches oder ein Bruchteil der Anzahl der zweiten Leiterabschnitte sein.

Gemäß zumindest einer Ausführungsform des elektrischen Antriebs bilden das erste Kurzschlussmittel und das zweite Kurzschlussmittel jeweils einen elektrischen Sternpunkt. Das bedeutet, dass die Summe der Phasenströme der an das erste Kurzschlussmittel angeschlossenen ersten Leiterabschnitte 0 ergibt. Ebenso ergibt die Summe der Phasenströme der an das zweite Kurzschlussmittel angeschlossenen zweiten Leiterabschnitte 0. Außerdem ergibt im elektrischen Sternpunkt die Summe der Phasenspannungen der angeschlossenen Leiterabschnitte 0. Das bedeutet, die Summe der Phasenspannungen der an das erste Kurzschlussmittel angeschlossenen ersten Leiterabschnitte ergibt 0. Außerdem ergibt die Summe der Phasenspannungen der an das zweite Kurzschlussmittel angeschlossenen zweiten Leiterabschnitte 0. Dass das erste Kurzschlussmittel und das zweite Kurzschlussmittel jeweils einen elektrischen Sternpunkt bilden, bedeutet weiter, dass im Betrieb des elektrischen Antriebs im ersten Kurzschlussmittel und im zweiten Kurzschlussmittel keine Kreisströme fließen.

Dennoch kann im ersten Kurzschlussmittel und im zweiten Kurzschlussmittel im Betrieb des elektrischen Antriebs ein Strom fließen. Dieser Strom $I_K$ im ersten oder zweiten Kurzschlussmittel ergibt sich aus den Phasenströmen $I_P$ der an das jeweilige Kurzschlussmittel angeschlossenen Leiterabschnitte, der Polpaarzahl p und der Anzahl N der angeschlossenen Leiterabschnitte wie folgt:

$$I_K = \frac{I_P}{2\,sin\left(\frac{\pi\,p}{N}\right)}$$

Das bedeutet, je geringer die Anzahl der an ein Kurzschlussmittel angeschlossenen Leiterabschnitte ist, desto geringer ist der Strom, welcher im Betrieb des elektrischen Antriebs im jeweiligen Kurzschlussmittel fließt. Es ist daher vorteilhaft, dass der Stator mindestens ein erstes Kurzschlussmittel und mindestens ein zweites Kurzschlussmittel aufweist, so dass die Anzahl der Leiterabschnitte, welche mit einem Kurzschlussmittel verbunden sind, verringert ist im Gegensatz zu einem Stator mit nur einem Kurzschlussmittel.

Gemäß zumindest einer Ausführungsform des elektrischen Antriebs weisen das erste Kurzschlussmittel und das zweite Kurzschlussmittel jeweils einen elektrischen Anschluss zur externen Kontaktierung auf. Das bedeutet, dass an den elektrischen Anschluss des ersten Kurzschlussmittels und an den elektrischen Anschluss des zweiten Kurzschlussmittels jeweils ein Kabel oder ein Anschluss, welches oder welcher nicht Teil des elektrischen Antriebs ist, angeschlossen werden kann. Beispielsweise können die elektrischen Anschlüsse des ersten Kurzschlussmittels und des zweiten Kurzschlussmittels dazu ausgelegt sein, elektrisch leitfähig mit einer externen Ladevorrichtung verbunden zu werden. Das kann bedeuten, dass die externe Ladevorrichtung zwei elektrische Kontakte aufweist, wovon einer elektrisch mit dem ersten Kurzschlussmittel verbunden wird und der andere elektrisch mit dem zweiten Kurzschlussmittel verbunden wird. Die Ladevorrichtung kann zum Laden einer an den elektrischen Antrieb angeschlossenen Batterie vorgesehen sein. Da der Stator mindestens ein erstes Kurzschlussmittel und mindestens ein zweites Kurzschlussmittel aufweist, kann die Ladevorrichtung über die elektrischen Anschlüsse an den elektrischen Antrieb angeschlossen werden. Somit kann vorteilhafterweise die an den elektrischen Antrieb angeschlossene Batterie effizient geladen werden.

Gemäß zumindest einer Ausführungsform des elektrischen Antriebs weisen die ersten Leiterabschnitte und die zweiten Leiterabschnitte jeweils mindestens einen elektrisch leitfähigen Stab auf, wobei die Stäbe in Nuten des Stators angeordnet sind. Dies ermöglicht einen hohen Nutfüllfaktor.

Gemäß zumindest einer Ausführungsform des elektrischen Antriebs ist der Stator dazu ausgelegt mindestens ein Drehfeld zu erzeugen, bei dem die Polpaarzahl veränderbar ist. Das bedeutet, dass die von den Halbbrücken bereitgestellten Phasenströme so geändert werden können, dass das vom Stator erzeugte Drehfeld unterschiedliche Polpaarzahlen aufweisen kann. Die Anzahl der Pole des vom Stator erzeugten Drehfeldes hängt von den von den Halbbrücken bereitgestellten Phasenströmen ab. Somit kann durch eine Änderung der Phasenströme die Anzahl der Pole des vom Stator erzeugten Drehfeldes geändert werden. Das Drehfeld kann zeitlich veränderlich sein. Damit das erste Kurzschlussmittel und das zweite Kurzschlussmittel jeweils einen elektrischen Sternpunkt bilden, muss die Summe der jeweiligen Phasenströme oder Phasenspannungen für jede gewählte Polpaarzahl 0 ergeben. Vorteilhafterweise kann bei der elektrischen Maschine die Polpaarzahl des vom Stator erzeugten Drehfeldes geändert werden, ohne den Aufbau der elektrischen Maschine zu verändern. Somit ist es auch möglich, die Polpaarzahl im Betrieb der elektrischen Maschine zu verändern. Alternativ oder zusätzlich kann der Stator dazu ausgelegt sein mehrere Drehfelder zu erzeugen, bei denen die Polpaarzahlen nicht veränderbar sind.

Gemäß zumindest einer Ausführungsform des elektrischen Antriebs sind die ersten Leiterabschnitte mit einer ersten Stromversorgungseinheit verbunden und die zweiten Leiterabschnitte sind mit einer zweiten Stromversorgungseinheit verbunden. Bei der ersten und bei der zweiten Stromversorgungseinheit kann es sich jeweils um eine Spannungsversorgungseinheit, um eine Batterie, um einen Teilbereich einer Batterie, um einen Kondensator, um eine Brennstoffzelle oder um eine Kombination von mindestens zwei dieser Möglichkeiten handeln.

Gemäß zumindest einer Ausführungsform des elektrischen Antriebs sind die erste Stromversorgungseinheit und die zweite Stromversorgungseinheit elektrisch miteinander verbunden. Die erste Stromversorgungseinheit und die zweite Stromversorgungseinheit können elektrisch in Serie geschaltet sein. Alternativ können die erste Stromversorgungseinheit und die zweite Stromversorgungseinheit elektrisch parallel geschaltet sein. Durch die Verwendung von mindestens einer ersten Stromversorgungseinheit und mindestens einer zweiten Stromversorgungseinheit können diese kleiner ausgestaltet sein als eine gemeinsame Stromversorgungseinheit zur Versorgung aller Leiterabschnitte. Daher können die erste Stromversorgungseinheit und die zweite Stromversorgungseinheit flexibler in einem Fahrzeug, welches den elektrischen Antrieb aufweist, verteilt werden.

Gemäß zumindest einer Ausführungsform des elektrischen Antriebs sind die ersten Leiterabschnitte und die zweiten Leiterabschnitte mit einer gemeinsamen Stromversorgungseinheit verbunden.

Des Weiteren wird ein Versorgungssystem für den elektrischen Antrieb angegeben. Gemäß zumindest einer Ausführungsform des Versorgungssystems für den elektrischen Antrieb, weist das Versorgungssystem den hier beschrieben elektrischen Antrieb auf. Somit sind alle Merkmale des beschriebenen elektrischen Antriebs auch für das Versorgungssystem offenbart und umgekehrt. Das Versorgungssystem weist weiter einen Transformator, welcher an eine Energiequelle angeschlossen ist, auf. Der Transformator ist dazu ausgelegt eine am Transformator anliegende Eingangsspannung in eine Ausgangsspannung umzuwandeln. Bei der Eingangsspannung und der Ausgangsspannung handelt es sich um Wechselspannungen. Die Eingangsspannung kann höher als die Ausgangsspannung sein. Bei der Eingangsspannung kann es sich um eine von der Energiequelle bereitgestellte Spannung handeln. Der Transformator kann einen ersten ausgangsseitigen elektrischen Kontakt und einen zweiten ausgangsseitigen elektrischen Kontakt aufweisen. Zwischen dem ersten ausgangsseitigen Kontakt und dem zweiten ausgangsseitigen Kontakt kann die Ausgangsspannung abgegriffen werden.

Das Versorgungssystem weist weiter eine lösbare elektrische Verbindung zwischen dem Transformator und dem ersten Kurzschlussmittel auf. Das kann bedeuten, dass der erste oder der zweite ausgangsseitige Kontakt des Transformators elektrisch leitfähig mit dem ersten Kurzschlussmittel verbunden ist, wobei die Verbindung reversibel gelöst werden kann.

Das Versorgungssystem weist weiter eine lösbare elektrische Verbindung zwischen dem Transformator und dem zweitem Kurzschlussmittel auf. Das kann bedeuten, dass derjenige des ersten und des zweiten ausgangsseitigen Kontakts des Transformators, welcher nicht mit dem ersten Kurzschlussmittel verbunden ist, elektrisch leitfähig mit dem zweiten Kurzschlussmittel verbunden ist, wobei die Verbindung reversibel gelöst werden kann.

Das Versorgungssystem weist weiter eine Batterie auf. Die Batterie kann dazu ausgelegt sein den elektrischen Antrieb mit Energie zu versorgen. Beispielsweise beträgt die Batteriespannung höchstens 60 V.

Der elektrische Antrieb ist zwischen dem Transformator und der Batterie angeordnet. Somit kann die von Transformator am ersten und zweiten ausgangsseitigen Kontakt bereitgestellte Wechselspannung durch den elektrischen Antrieb in eine Gleichspannung umgerichtet werden. Das bedeutet, der elektrische Antrieb kann als Gleichrichter verwendet werden. Dazu ist der Transformator an das erste Kurzschlussmittel und an das zweite Kurzschlussmittel angeschlossen. Dann kann die an den ersten und zweiten Leiterabschnitten anliegende Wechselspannung über die Halbbrücken gleichgerichtet werden. Die Halbbrücken sind elektrisch mit der Batterie verbunden, so dass die Batterie mit der erzeugten Gleichspannung gespeist werden kann.

Das Versorgungssystem kann eine Ladevorrichtung aufweisen, welche den Transformator aufweisen. Der elektrische Antrieb und die Batterie können in einem Fahrzeug oder einem Flugzeug angeordnet sein. Bei dem Fahrzeug kann es sich um ein Landfahrzeug oder um ein Wasserfahrzeug handeln. Dabei ist die Ladevorrichtung nicht Teil des Fahrzeugs oder Flugzeugs. Bei der Ladevorrichtung kann es sich um eine externe Ladevorrichtung zum Laden der Batterie handeln.

Vorteilhafterweise kann die externe Ladevorrichtung direkt an den elektrischen Antrieb angeschlossen werden. Zum Laden einer Batterie eines Fahrzeugs oder eines Flugzeugs kann eine externe Ladevorrichtung an das Fahrzeug oder das Flugzeug angeschlossen werden. Dabei ist es nicht nötig, dass die Ladevorrichtung einen Gleichrichter aufweist, da die vom Transformator bereitgestellte Wechselspannung über den elektrischen Antrieb gleichgerichtet wird.

Des Weiteren wird ein Verfahren zum Betreiben des elektrischen Antriebs angegeben. Somit sind alle Merkmale des beschriebenen elektrischen Antriebs auch für das Verfahren zum Betreiben des elektrischen Antriebs offenbart und umgekehrt.

Der elektrische Antrieb kann dazu verwendet werden zum Laden einer Batterie eine Wechselspannung gleichzurichten. Dabei kann die Batterie über den elektrischen Antrieb geladen werden. Dazu ist es nötig eine Spannung zwischen den Halbbrücken anzulegen. Dadurch wird erreicht, dass eine Spannung zwischen dem ersten Kurzschlussmittel und dem zweiten Kurzschlussmittel angelegt wird. Handelt es sich bei der angelegten Spannung um eine Wechselspannung, so kann diese über die Halbbrücken gleichgerichtet werden. Dazu können die Halbbrücken in ähnlicher Art und Weise im Vergleich zu der Situation, in welcher die Batterie den elektrischen Antrieb mit Energie versorgt, betrieben werden. Das kann bedeuten, dass zwei Schalter jeder Halbbrücke abwechselnd geöffnet und geschlossen werden, so dass die an den Leiterabschnitten anliegende Wechselspannung gleichgerichtet wird. Mit der erzeugten Gleichspannung kann die Batterie geladen werden. Die ersten Leiterabschnitte sind während des Ladens der Batterie parallel geschaltet. Außerdem sind die zweiten Leiterabschnitte während des Ladens der Batterie parallel geschaltet. Beispielsweise beträgt die Batteriespannung höchstens 60 V.

Vorteilhafterweise wird somit in einer externen Ladevorrichtung zum Laden der Batterie kein Gleichrichter benötigt. Durch die Verwendung des elektrischen Antriebs zum Laden der Batterie, kann diese effizient geladen werden.

Gemäß zumindest einer Ausführungsform des Verfahrens wird dem elektrischen Antrieb eine Wechselspannung durch eine Energiequelle zugeführt, die Wechselspannung wird durch den elektrischen Antrieb gleichgerichtet, und die Batterie wird mit einer vom elektrischen Antrieb bereitgestellten Gleichspannung gespeist. Bei der Energiequelle handelt es sich um eine Wechselspannungsquelle. Zwischen der Energiequelle und dem elektrischen Antrieb kann ein Transformator angeordnet sein. Das bedeutet, die von der Energiequelle bereitgestellte Wechselspannung wird durch den Transformator transformiert. Die Wechselspannung der Energiequelle wird dem elektrischen Antrieb zugeführt. Das kann bedeuten, dass der elektrische Antrieb elektrisch mit der Energiequelle verbunden ist. Zum Beispiel ist der elektrische Antrieb über den Transformator elektrisch mit der Energiequelle verbunden. Die Gleichrichtung der Wechselspannung erfolgt wie für das Versorgungssystem für den elektrischen Antrieb beschrieben.

Weist der Stator der elektrischen Maschine insgesamt mindestens vier Kurzschlussmittel auf, so können mindestens zwei Transformatoren an den elektrischen Antrieb angeschlossen werden. Das bedeutet, mindestens zwei Transformatoren können parallel an den elektrischen Antrieb angeschlossen werden. Folglich kann die zu übertragende Leistung pro Transformator kleiner sein. Alternativ kann eine größere Gesamtleistung übertragen werden.

Des Weiteren wird ein weiteres Verfahren zum Betreiben des elektrischen Antriebs angegeben. Somit sind alle Merkmale des beschriebenen elektrischen Antriebs auch für das weitere Verfahren zum Betreiben des elektrischen Antriebs offenbart und umgekehrt.

Gemäß zumindest einer Ausführungsform des Verfahrens wird dem elektrischen Antrieb eine Gleichspannung durch eine Batterie zugeführt, die Gleichspannung wird durch den elektrischen Antrieb in eine Wechselspannung umgerichtet, und ein Energieverbraucher wird mit der vom elektrischen Antrieb bereit gestellten Wechselspannung gespeist.

Der elektrische Antrieb kann somit dazu verwendet werden einen Energieverbraucher mit Energie zu versorgen. Bei dem Energieverbraucher kann es sich um jede Art von Verbraucher handeln, welcher elektrischen Strom benötigt. Zum Beispiel handelt es sich bei dem Energieverbraucher um ein Stromnetz. Zur Versorgung des Energieverbrauchers wird der elektrische Antrieb in umgekehrter Richtung im Vergleich zum vorigen Verfahren als Umrichter verwendet. Das kann bedeuten, dass zwei Schalter jeder Halbbrücke abwechselnd geöffnet und geschlossen werden, so dass die von der Batterie bereitgestellte Gleichspannung in eine Wechselspannung umgerichtet wird. Dazu werden die ersten Leiterabschnitte parallel geschaltet und die zweiten Leiterabschnitte werden parallel geschaltet. Der Energieverbraucher kann an das erste Kurzschlussmittel und an das zweite Kurzschlussmittel angeschlossen werden, zwischen welchen eine Wechselspannung abgegriffen werden kann. Weiter ist es möglich, dass der Energieverbraucher über einen Transformator mit dem elektrischen Antrieb verbunden ist. Insgesamt werden bei diesem Verfahren der elektrische Antrieb und die Batterie als Generator verwendet, um beispielsweise Strom in ein Stromnetz einzuspeisen.

Gemäß zumindest einer weiteren Ausführungsform des Verfahrens zum Betreiben des elektrischen Antriebs werden die ersten Leiterabschnitte über die angeschlossenen Halbbrücken von der Batterie mit Phasenströmen versorgt, so dass mindestens ein Drehfeld erzeugt wird. Durch dieses werden in den zweiten Leiterabschnitten Wechselströme induziert, welche über die an die zweiten Leiterabschnitte angeschlossenen Halbbrücken gleichgerichtet werden und der Batterie zugeführt werden. Diese Ausführungsform ist insbesondere vorteilhaft, wenn die Batterie mehrere Batteriemodule aufweist, um ein Balancing zu ermöglichen. Bei der Batterie kann es sich in diesem Fall auch um einen Kondensator, eine Brennstoffzelle oder eine Kombination dieser handeln. Bei diesem Ausführungsbeispiel können alternativ die zweiten Leiterabschnitte zur Erzeugung des Drehfeldes und die ersten Leiterabschnitte zum Gleichrichten verwendet werden. Außerdem sind Ausführungsbeispiele mit dritten und weiteren Leiterabschnitten möglich.

Im Folgenden werden der hier beschriebene elektrische Antrieb, das Versorgungssystem und die Verfahren zum Betreiben des elektrischen Antriebs in Verbindung mit Ausführungsbeispielen und den dazugehörigen Figuren näher erläutert.

Die Figuren 1A und 1B zeigen ein Beispiel einer elektrischen Wicklung und eines Stators.

Die Figuren 2A und 2B zeigen ein weiteres Beispiel einer elektrischen Wicklung und eines Stators.

Die Figuren 3A und 3B zeigen eine elektrische Wicklung eines Stators gemäß eines Ausführungsbeispiels.

Figur 4 zeigt eine elektrische Wicklung eines Stators gemäß eines weiteren Ausführungsbeispiels.

Figur 5 zeigt ein Ausführungsbeispiel eines Stators.

In den Figuren 6A und 6B sind ein Stator gemäß einem weiteren Ausführungsbeispiel und die elektrische Wicklung des Stators gezeigt.

Die Figuren 7 und 8 zeigen Kurzschlussmittel eines Stators gemäß eines weiteren Ausführungsbeispiels.

Die Figuren 9, 10A, 10B, 11, 12, 13 und 14 zeigen Ersatzschaltbilder des elektrischen Antriebs gemäß verschiedener Ausführungsbeispiele.

In Figur 15 ist ein Ersatzschaltbild einer Halbbrücke gezeigt.

In Figur 16 ist schematisch ein Ausführungsbeispiel des elektrischen Antriebs gezeigt.

In Figur 17 ist ein Ersatzschaltbild des elektrischen Antriebs gemäß einem weiteren Ausführungsbeispiel mit einem Transformator gezeigt.

In Figur 18 ist ein Versorgungssystem für den elektrischen Antrieb gemäß einem Ausführungsbeispiel gezeigt.

Die Figuren 19A und 19B zeigen jeweils einen Ausschnitt durch einen Querschnitt eines Stators gemäß einem weiteren Ausführungsbeispiel.

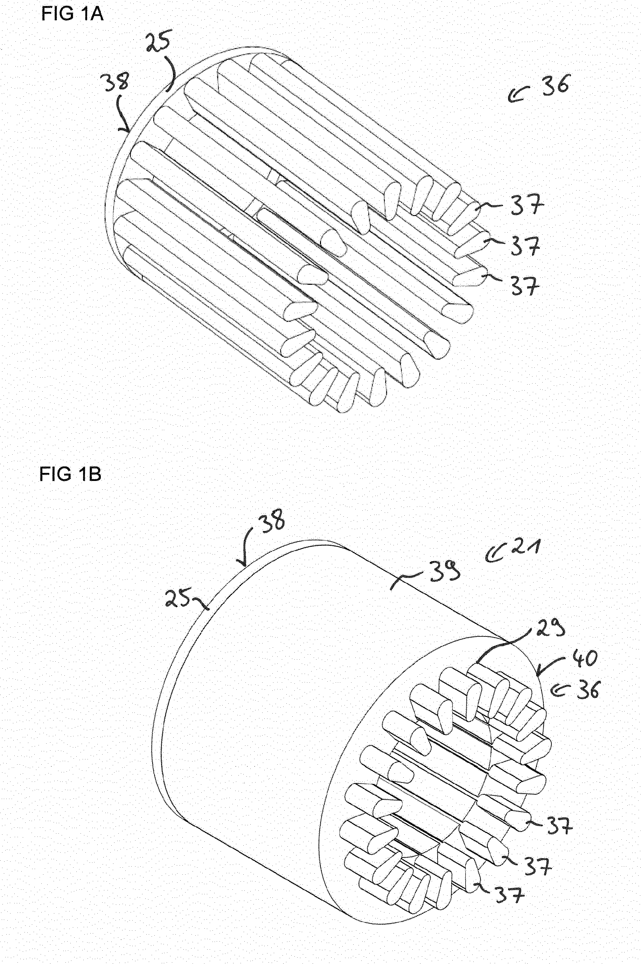

In Figur 1A ist ein Beispiel einer elektrischen Wicklung 36 gezeigt. Die elektrische Wicklung 36 weist eine Vielzahl von elektrisch leitfähigen Stäben 37 auf. Die Stäbe 37 sind zylinderförmig angeordnet. Die Stäbe 37 erstrecken sich geradlinig und parallel zueinander. An einer ersten Seite 38 der elektrischen Wicklung 36 sind die Stäbe 37 jeweils elektrisch mit einem ersten Kurzschlussmittel 25 verbunden. Bei dem ersten Kurzschlussmittel 25 handelt es sich um einen Kurzschlussring.

In Figur 1B ist ein Beispiel eines Stators 21 gezeigt. Bei dem Beispiel handelt es sich um kein Ausführungsbeispiel. Der Stator 21 weist die in Figur 1A gezeigte elektrische Wicklung 36 auf. Weiter weist der Stator 21 eine Vielzahl von Nuten 29 auf. Jeder der Stäbe 37 der elektrischen Wicklung 36 ist in jeweils einer Nut 29 angeordnet. Die Nuten 29 erstrecken sich durch ein Statorblechpaket 39 von einer ersten Seite 38 des Stators 21 zu einer zweiten Seite 40. An der ersten Seite 38 ist das erste Kurzschlussmittel 25 angeordnet. Der Stator 21 kann in einer Radialflussmaschine verwendet werden. Die Radialflussmaschine kann einen Rotor 22 aufweisen, welcher im Stator 21 angeordnet ist.

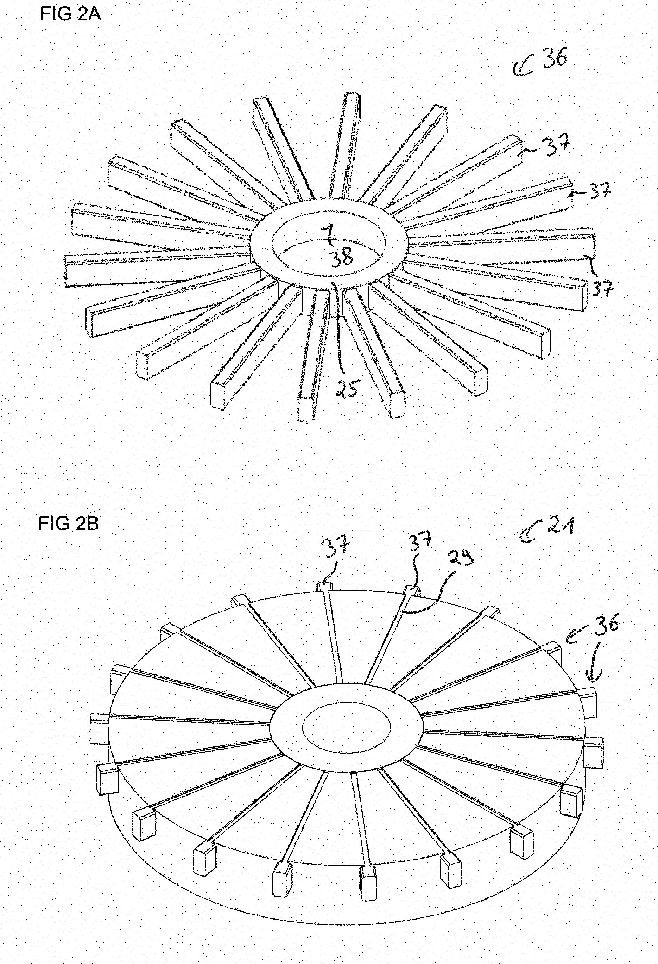

In Figur 2A ist ein weiteres Beispiel einer elektrischen Wicklung 36 gezeigt. Die elektrische Wicklung 36 weist eine Vielzahl von elektrisch leitfähigen Stäben 37 auf. Die Stäbe 37 erstrecken sich radial oder sternförmig von einem Mittelpunkt eines Kreises nach außen. An einer ersten Seite 38 der Stäbe 37 sind diese über ein erstes Kurzschlussmittel 25 elektrisch miteinander verbunden. Die erste Seite 38 ist die dem Mittelpunkt des Kreises zugewandte Seite. Bei dem ersten Kurzschlussmittel 25 handelt es sich um einen Kurzschlussring.

In Figur 2B ist ein Stator 21 mit der in Figur 2A gezeigten elektrischen Wicklung 36 gezeigt. Bei dem Stator 21 handelt es sich nicht um ein Ausführungsbeispiel. Der Stator 21 weist Nuten 29 auf, in welchen jeweils einer der Stäbe 37 angeordnet ist. Die Nuten 29 können von einem Pulververbundwerkstoff umgeben sein. Der Stator 21 kann in einer Axialflussmaschine verwendet werden.

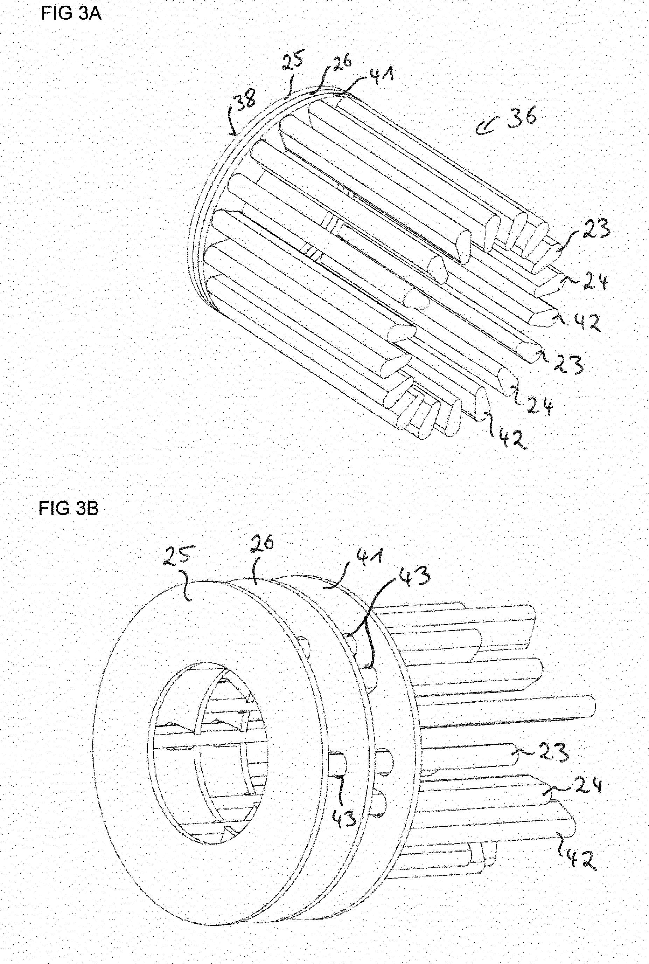

In Figur 3A ist eine elektrische Wicklung 36 einer elektrischen Maschine 10 des elektrischen Antriebs 20 gemäß einem Ausführungsbeispiel gezeigt. Die elektrische Wicklung 36 weist eine Vielzahl von ersten Leiterabschnitten 23, zweiten Leiterabschnitten 24 und dritten Leiterabschnitten 42 auf. Die ersten Leiterabschnitte 23, die zweiten Leiterabschnitte 24 und die dritten Leiterabschnitte 42 können in Nuten 29 eines Stators 21 der elektrischen Maschine 10 angeordnet sein. Die elektrische Maschine 10 weist weiter einen zum Stator 21 drehbar gelagerten Rotor 22 auf, welcher im Stator 21 angeordnet ist. Bei den ersten Leiterabschnitten 23, den zweiten Leiterabschnitten 24 und den dritten Leiterabschnitten 42 handelt es sich um elektrisch leitfähige Stäbe 37 wie in Figur 1A gezeigt. An einer ersten Seite 38 der elektrischen Wicklung 36 sind ein erstes Kurzschlussmittel 25, ein zweites Kurzschlussmittel 26 und ein drittes Kurzschlussmittel 41 angeordnet. Das erste Kurzschlussmittel 25, das zweite Kurzschlussmittel 26 und das dritte Kurzschlussmittel 41 weisen jeweils ein elektrisch leitfähiges Material auf. Außerdem weisen das erste Kurzschlussmittel 25, das zweite Kurzschlussmittel 26 und das dritte Kurzschlussmittel 41 jeweils die Form eines Rings auf. Die ersten Leiterabschnitte 23 sind elektrisch mit dem ersten Kurzschlussmittel 25 verbunden. Die zweiten Leiterabschnitte 24 sind elektrisch mit dem zweiten Kurzschlussmittel 26 verbunden. Die dritten Leiterabschnitte 42 sind elektrisch mit dem dritten Kurzschlussmittel 41 verbunden. Das erste Kurzschlussmittel 25, das zweite Kurzschlussmittel 26 und das dritte Kurzschlussmittel 41 sind entlang der Haupterstreckungsrichtung der ersten Leiterabschnitte 23 nebeneinander angeordnet. Dabei können das erste Kurzschlussmittel 25 und das zweite Kurzschlussmittel 26 direkt miteinander in Kontakt sein. Ebenso können das zweite Kurzschlussmittel 26 und das dritte Kurzschlussmittel 41 direkt miteinander in Kontakt sein. Alternativ können das erste Kurzschlussmittel 25, das zweite Kurzschlussmittel 26 und das dritte Kurzschlussmittel 41 elektrisch zueinander isoliert sein. Dazu kann beispielsweise ein elektrisch isolierendes Material zwischen dem ersten Kurzschlussmittel 25, dem zweiten Kurzschlussmittel 26 und dem dritten Kurzschlussmittel 41 angeordnet sein.

In Figur 3B ist die in Figur 3A gezeigte elektrische Wicklung 36 dargestellt. Dabei sind einzelne Komponenten der elektrischen Wicklung 36 versetzt zueinander dargestellt. Das dritte Kurzschlussmittel 41 weist Ausnehmungen 43 auf, durch welche sich die ersten Leiterabschnitte 23 und die zweiten Leiterabschnitte 24 erstrecken. Somit sind lediglich die dritten Leiterabschnitte 42 elektrisch mit dem dritten Kurzschlussmittel 41 verbunden. Das zweite Kurzschlussmittel 26 weist Ausnehmungen 43 auf, durch welche sich die ersten Leiterabschnitte 23 erstrecken. Somit sind lediglich die zweiten Leiterabschnitte 24 elektrisch mit dem zweiten Kurzschlussmittel 26 verbunden. Die ersten Leiterabschnitte 23 sind elektrisch mit dem ersten Kurzschlussmittel 25 verbunden. Die ersten Leiterabschnitte 23, die zweiten Leiterabschnitte 24 und die dritten Leiterabschnitte 42 sind alternierend entlang des Umfangs des Stators 21 angeordnet. Das bedeutet, dass die ersten Leiterabschnitte 23, die zweiten Leiterabschnitte 24 und die dritten Leiterabschnitte 42 alternierend entlang des Umfangs des ersten Kurzschlussmittels 25 angeordnet sind. Jeder der ersten Leiterabschnitte 23 ist zwischen einem zweiten Leiterabschnitt 24 und einem dritten Leiterabschnitt 42 angeordnet. Jeder der zweiten Leiterabschnitte 24 ist zwischen einem ersten Leiterabschnitt 23 und einem dritten Leiterabschnitt 42 angeordnet. Jeder der dritten Leiterabschnitte 42 ist zwischen einem ersten Leiterabschnitt 23 und einem zweiten Leiterabschnitt 24 angeordnet. Die Anzahl der ersten Leiterabschnitte 23 ist gleich der Anzahl der zweiten Leiterabschnitte 24 und gleich der Anzahl der dritten Leiterabschnitte 42. Die elektrische Wicklung 36 ist gemäß einem Ausführungsbeispiel der elektrischen Maschine 10 in Nuten 29 des Stators 21 angeordnet.

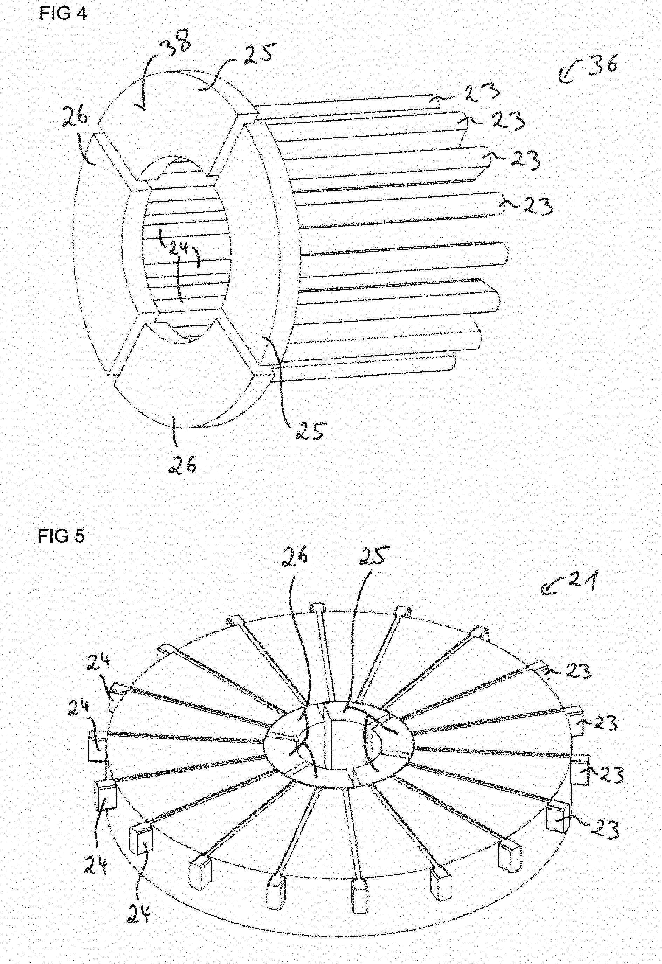

In Figur 4 ist die elektrische Wicklung 36 der elektrischen Maschine 10 gemäß einem weiteren Ausführungsbeispiel gezeigt. Im Vergleich zu dem in Figur 3A gezeigten Ausführungsbeispiel weist die elektrische Wicklung 36 insgesamt vier Kurzschlussmittel 25, 26 auf. Das bedeutet, dass die elektrische Wicklung 36 zwei erste Kurzschlussmittel 25 und zwei zweite Kurzschlussmittel 26 aufweist. Die ersten Kurzschlussmittel 25 und die zweiten Kurzschlussmittel 26 sind an einer ersten Seite 38 der elektrischen Wicklung 36 angeordnet. Die ersten Kurzschlussmittel 25 und die zweiten Kurzschlussmittel 26 weisen jeweils die Form eines Kreissegments auf. Die ersten Kurzschlussmittel 25 und die zweiten Kurzschlussmittel 26 sind beabstandet zueinander angeordnet und nicht in direktem Kontakt. Die ersten Leiterabschnitte 23 und die zweiten Leiterabschnitte 24 sind nicht alternierend entlang des Umfangs des Stators 21 angeordnet. Die ersten Leiterabschnitte 23, welche mit dem ersten Kurzschlussmittel 25 verbunden sind, sind nebeneinander entlang des Umfangs des Stators 21 angeordnet. In einem Querschnitt durch die elektrische Maschine 10 sind die ersten Kurzschlussmittel 25 und die zweiten Kurzschlussmittel 26 nebeneinander angeordnet. Das bedeutet, dass die ersten Kurzschlussmittel 25 und die zweiten Kurzschlussmittel 26 in einer Ebene nebeneinander angeordnet sind.

In Figur 5 ist ein Ausführungsbeispiel des Stators 21 gezeigt. Der Stator 21 weist den in Figur 2B gezeigte Aufbau auf, mit dem Unterschied, dass der Stator 21 insgesamt sechs Kurzschlussmittel 25, 26 aufweist. Dazu ist das in Figur 2B gezeigte erste Kurzschlussmittel 25 in sechs Segmente unterteilt. Jedes der Kurzschlussmittel 25, 26 ist mit drei Leiterabschnitten 23, 24 verbunden. Die Kurzschlussmittel 25, 26 sind beabstandet zueinander angeordnet und nicht in direktem Kontakt.

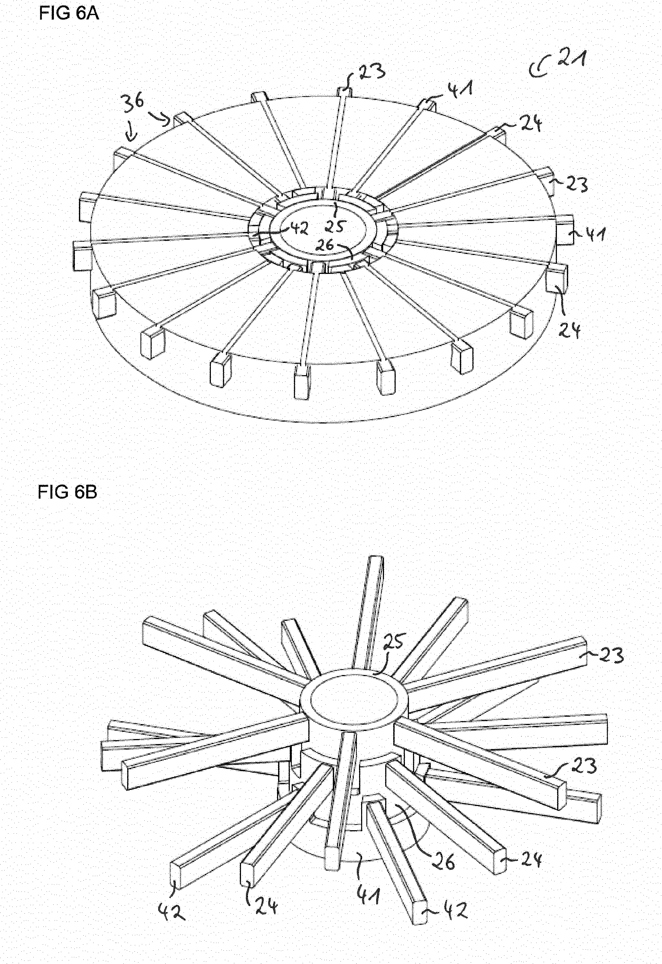

In Figur 6A ist ein weiteres Ausführungsbeispiel des Stators 21 gezeigt. Im Vergleich zu dem in Figur 5 gezeigten Ausführungsbeispiel weist der Stator 21 ein erstes Kurzschlussmittel 25, ein zweites Kurzschlussmittel 26 und ein drittes Kurzschlussmittel 41 auf. Die Kurzschlussmittel 25, 26, 41 sind versetzt zueinander angeordnet. Das bedeutet, dass die Kurzschlussmittel 25, 26, 41 im Querschnitt durch den Stator 21 an verschiedenen radialen Positionen angeordnet sind. Die elektrische Wicklung 36 des Stators 21 weist sechs erste Leiterabschnitte 23 auf, welche mit einem ersten Kurzschlussmittel 25 verbunden sind. Die ersten Leiterabschnitte 23 sind gleichmäßig entlang des Umfangs des Stators 21 verteilt, sodass diese nicht direkt zueinander benachbart angeordnet sind. Sechs zweite Leiterabschnitte 24 sind mit dem zweiten Kurzschlussmittel 26 verbunden und sechs dritte Leiterabschnitte 42 sind mit dem dritten Kurzschlussmittel 41 verbunden. Die zweiten Leiterabschnitte 24 und die dritten Leiterabschnitte 42 sind jeweils wie die ersten Leiterabschnitte 23 entlang des Umfangs des Stators 21 verteilt. Die Kurzschlussmittel 25, 26, 41 können in direktem Kontakt miteinander sein. Es ist weiter möglich, dass zwischen den Kurzschlussmitteln 25, 26, 41 ein elektrisch isolierendes Material angeordnet ist.

In Figur 6B sind die in Figur 6A gezeigten Kurzschlussmittel 25, 26, 41 mit den Leiterabschnitten 23, 24, 42 gezeigt. Dabei sind die Kurzschlussmittel 25, 26, 41 mit den jeweiligen Leiterabschnitten 23, 24, 42 versetzt zueinander dargestellt. Das zweite Kurzschlussmittel 26 und das dritte Kurzschlussmittel 41 weisen jeweils Ausnehmungen 43 auf, in denen die jeweils anderen Leiterabschnitte 23, 24 angeordnet sind. Außerdem weist das erste Kurzschlussmittel 25 einen kleineren Durchmesser als das zweite Kurzschlussmittel 26 auf. Das zweite Kurzschlussmittel 26 weist einen kleineren Durchmesser als das dritte Kurzschlussmittel 41 auf.

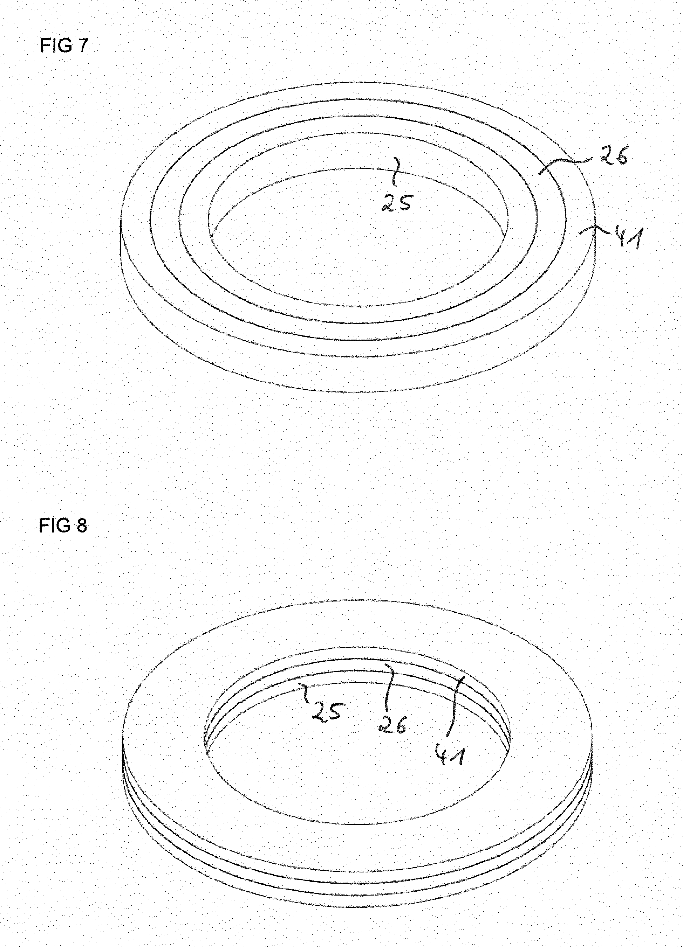

In Figur 7 sind ein erstes Kurzschlussmittel 25, ein zweites Kurzschlussmittel 26 und ein drittes Kurzschlussmittel 41 des Stators 21 gemäß einem weiteren Ausführungsbeispiel gezeigt. Das erste Kurzschlussmittel 25, das zweite Kurzschlussmittel 26 und das dritte Kurzschlussmittel 41 weisen jeweils die Form eines Rings auf. Außerdem sind das erste Kurzschlussmittel 25, das zweite Kurzschlussmittel 26 und das dritte Kurzschlussmittel 41 in einem Querschnitt durch die elektrische Maschine 10 nebeneinander angeordnet. Somit weist das erste Kurzschlussmittel 25 einen kleineren Durchmesser als das zweite Kurzschlussmittel 26 auf. Das zweite Kurzschlussmittel 26 weist einen kleineren Durchmesser als das dritte Kurzschlussmittel 41 auf. Das erste Kurzschlussmittel 25, das zweite Kurzschlussmittel 26 und das dritte Kurzschlussmittel 41 können in direktem Kontakt sein oder ein elektrisch isolierendes Material kann zwischen diesen angeordnet sein. Diese Anordnung der Kurzschlussmittel 25, 26, 41 ist unabhängig von der Anordnung der Leiterabschnitte 23, 24, 42.

In Figur 8 sind ein erstes Kurzschlussmittel 25, ein zweites Kurzschlussmittel 26 und ein drittes Kurzschlussmittel 41 des Stators 21 gemäß einem weiteren Ausführungsbeispiel gezeigt. Das erste Kurzschlussmittel 25, das zweite Kurzschlussmittel 26 und das dritte Kurzschlussmittel 41 weisen jeweils die Form eines Rings auf. Außerdem sind das erste Kurzschlussmittel 25, das zweite Kurzschlussmittel 26 und das dritte Kurzschlussmittel 41 entlang einer Rotationsachse des Rotors 22 nebeneinander angeordnet. Das bedeutet, dass das erste Kurzschlussmittel 25, das zweite Kurzschlussmittel 26 und das dritte Kurzschlussmittel 41 jeweils den gleichen Durchmesser aufweisen. Das erste Kurzschlussmittel 25, das zweite Kurzschlussmittel 26 und das dritte Kurzschlussmittel 41 können in direktem Kontakt sein oder ein elektrisch isolierendes Material kann zwischen diesen angeordnet sein. Diese Anordnung der Kurzschlussmittel 25, 26, 41 ist unabhängig von der Anordnung der Leiterabschnitte 23, 24, 42.

Gemäß einem weiteren Ausführungsbeispiel weist der Stator 21 eine Kombination von in den Figuren 7 und 8 gezeigten Kurzschlussmitteln 25, 26 auf.

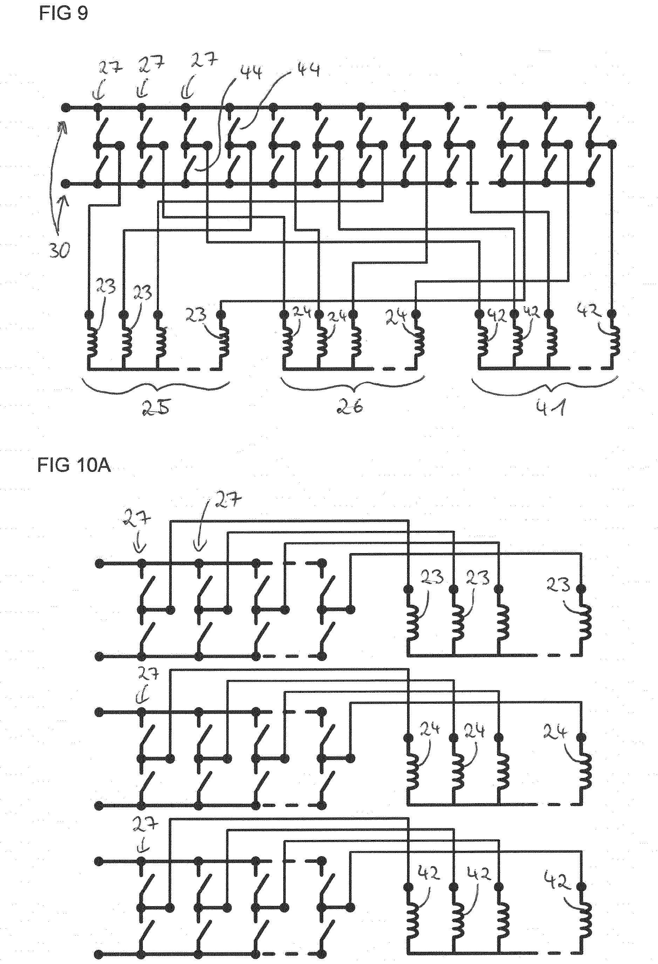

In Figur 9 ist ein Ersatzschaltbild des elektrischen Antriebs 20 gemäß einem Ausführungsbeispiel gezeigt. Der Stator 21 weist ein erstes Kurzschlussmittel 25, ein zweites Kurzschlussmittel 26 und ein drittes Kurzschlussmittel 41 auf. Mit dem ersten Kurzschlussmittel 25 sind erste Leiterabschnitte 23 elektrisch verbunden. Mit dem zweiten Kurzschlussmittel 26 sind zweite Leiterabschnitte 24 elektrisch verbunden. Mit dem dritten Kurzschlussmittel 41 sind dritte Leiterabschnitte 42 elektrisch verbunden. Die ersten Leiterabschnitte 23, die zweiten Leiterabschnitte 24 und die dritten Leiterabschnitte 42 sind jeweils mit einer eigenen Halbbrücke 27 elektrisch verbunden. Die Halbbrücken 27 sind jeweils parallel zu einer ersten Stromversorgungseinheit 30 geschaltet. Bei der ersten Stromversorgungseinheit 30 handelt es sich um eine Gleichspannungsquelle. Die Halbbrücken 27 weisen jeweils zwei Schalter 44 auf. Die ersten Leiterabschnitte 23, die zweiten Leiterabschnitte 24 und die dritten Leiterabschnitte 42 sind alternierend entlang des Umfangs des Stators 21 angeordnet.

In Figur 10A ist ein Ersatzschaltbild des elektrischen Antriebs 20 gemäß einem weiteren Ausführungsbeispiel gezeigt. Im Unterschied zu dem in Figur 9 gezeigten Ausführungsbeispiel sind die den ersten Leiterabschnitten 23 zugeordneten Halbbrücken 27 parallel zueinander geschaltet. Außerdem sind die den zweiten Leiterabschnitten 24 zugeordneten Halbbrücken 27 parallel zueinander geschaltet und die den dritten Leiterabschnitten 42 zugeordneten Halbbrücken 27 sind parallel zueinander geschaltet. Die Halbbrücken 27 können elektrisch mit der ersten Stromversorgungseinheit 30 verbunden sein.

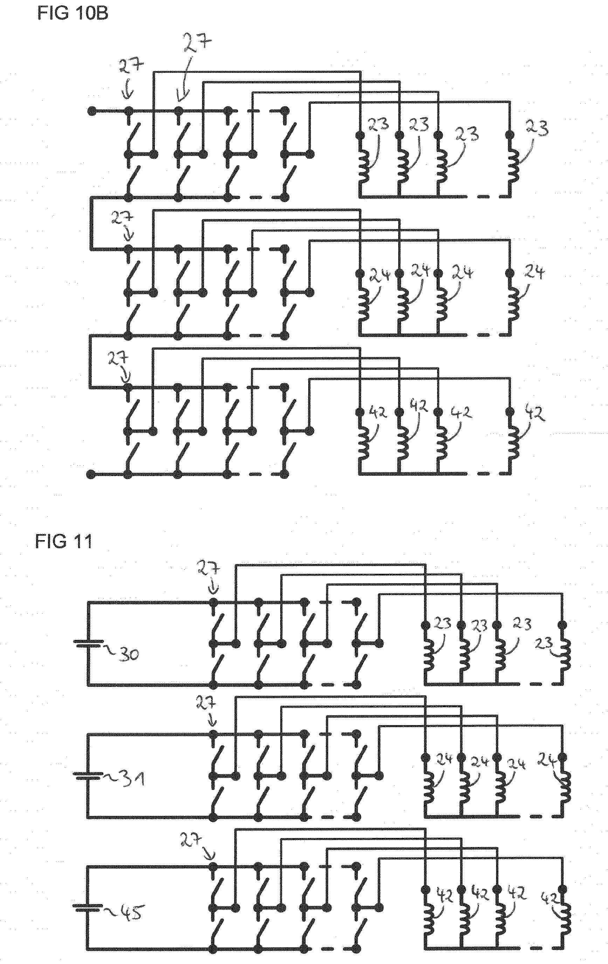

In Figur 10B ist ein Ersatzschaltbild des elektrischen Antriebs 20 gemäß einem weiteren Ausführungsbeispiel gezeigt. Im Unterschied zu dem in Figur 10A gezeigten Ausführungsbeispiel sind die den ersten Leiterabschnitten 23 zugeordneten Halbbrücken 27 in Serie zu den den zweiten Leiterabschnitten 24 zugeordneten Halbbrücken 27 und zu den den dritten Leiterabschnitten 42 zugeordneten Halbbrücken 27 geschaltet. Über diese Reihenschaltung können die Halbbrücken 27 elektrisch mit der ersten Stromversorgungseinheit 30 verbunden sein.

In Figur 11 ist ein Ersatzschaltbild des elektrischen Antriebs 20 gemäß einem weiteren Ausführungsbeispiel gezeigt. Im Unterschied zu dem in Figur 9 gezeigten Ausführungsbeispiel sind die ersten Leiterabschnitte 23 über die zugehörigen Halbbrücken 27 elektrisch mit einer ersten Stromversorgungseinheit 30 verbunden. Die zweiten Leiterabschnitte 24 sind über die zugehörigen Halbbrücken 27 elektrisch mit einer zweiten Stromversorgungseinheit 31 verbunden. Die dritten Leiterabschnitte 42 sind über die zugehörigen Halbbrücken 27 elektrisch mit einer dritten Stromversorgungseinheit 45 verbunden. Bei der ersten Stromversorgungseinheit 30, der zweiten Stromversorgungseinheit 31 und der dritten Stromversorgungseinheit 45 kann es sich um separate Batterien, Kondensatoren oder Brennstoffzellen handeln. Alternativ können die erste Stromversorgungseinheit 30, die zweite Stromversorgungseinheit 31 und die dritte Stromversorgungseinheit 45 einzelne Teilbereiche oder Module einer Batterie sein. Somit können die unterschiedlichen Leiterabschnitte 23, 24, 42 bei Bedarf mit unterschiedlichen Spannungen versorgt werden. Dies ist im Teillastbetrieb vorteilhaft. Die ersten Leiterabschnitte 23, die zweiten Leiterabschnitte 24 und die dritten Leiterabschnitte 42 können wie in Figur 3A gezeigt alternierend entlang des Umfangs des Stators 21 oder wie in Figur 4 gezeigt nebeneinander angeordnet sein.

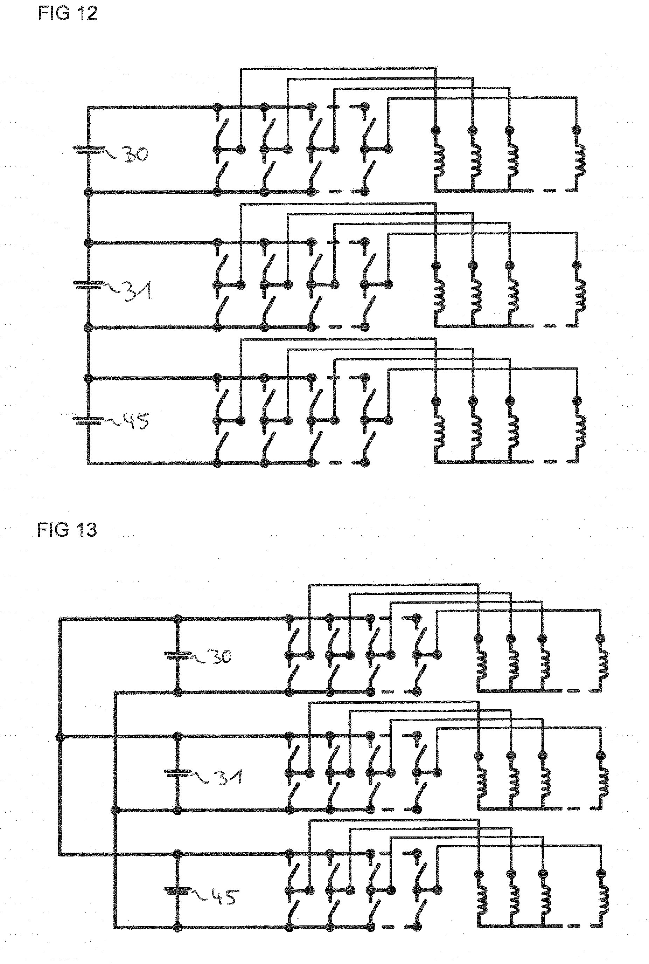

In Figur 12 ist ein Ersatzschaltbild des elektrischen Antriebs 20 gemäß einem weiteren Ausführungsbeispiel gezeigt. Im Unterschied zu dem in Figur 11 gezeigten Ausführungsbeispiel sind die erste Stromversorgungseinheit 30, die zweite Stromversorgungseinheit 31 und die dritte Stromversorgungseinheit 45 seriell zueinander geschaltet. Durch die serielle Verschaltung der Stromversorgungseinheiten 30, 31, 45 kann eine höhere Gesamtspannung erreicht werden. Dies ermöglicht die Verwendung von kleinen Spannungen im Stator 21 und den Anschluss an externe Systeme, welche mit einer größeren Spannung betrieben werden. Bei den externen Systemen kann es sich zum Beispiel um eine Ladevorrichtung handeln.

In Figur 13 ist ein Ersatzschaltbild des elektrischen Antriebs 20 gemäß einem weiteren Ausführungsbeispiel gezeigt. Im Unterschied zu dem in Figur 11 gezeigten Ausführungsbeispiel sind die erste Stromversorgungseinheit 30, die zweite Stromversorgungseinheit 31 und die dritte Stromversorgungseinheit 45 parallel zueinander geschaltet.

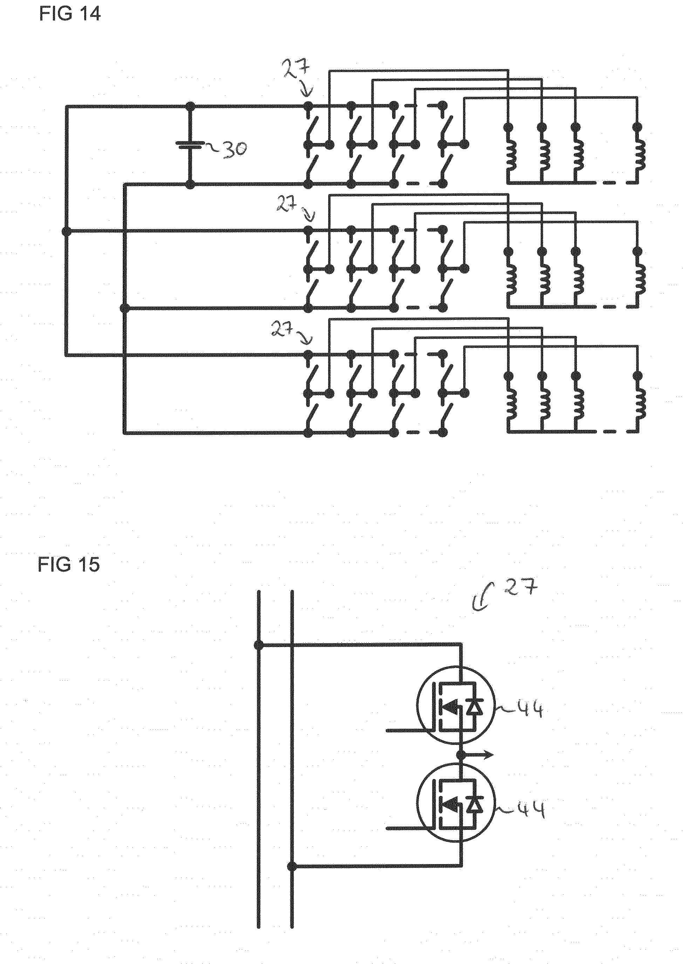

In Figur 14 ist ein Ersatzschaltbild des elektrischen Antriebs 20 gemäß einem weiteren Ausführungsbeispiel gezeigt. Im Unterschied zu dem in Figur 13 gezeigten Ausführungsbeispiel sind die Halbbrücken 27 insgesamt mit nur einer ersten Stromversorgungseinheit 30 verbunden.

Alternativ können die in den Figuren 9, 10, 11, 12, 13 und 14 gezeigten Ausführungsbeispiele jeweils nur ein erstes Kurzschlussmittel 25 und ein zweites Kurzschlussmittel 26 und kein drittes Kurzschlussmittel 41 aufweisen.

In Figur 15 ist ein Ersatzschaltbild einer Halbbrücke 27 gezeigt. Die Halbbrücke 27 weist zwei Metall-Oxid-Halbleiter-Feldeffekttransistoren (MOSFET) als Schalter 44 auf.

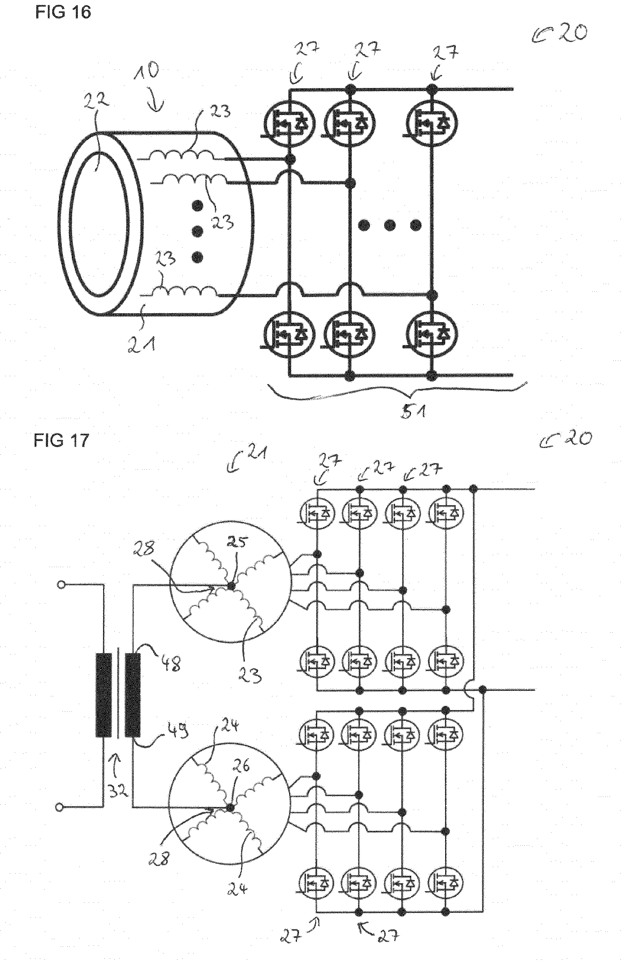

In Figur 16 ist schematisch ein Ausführungsbeispiel des elektrischen Antriebs 20 gezeigt. Die elektrische Maschine 10 weist einen Stator 21 und einen beweglich zum Stator 21 gelagerten Rotor 22 auf. Der Rotor 22 ist im Stator 21 angeordnet. Bei der elektrischen Maschine 10 handelt es sich um eine Radialflussmaschine. Der Stator 21 ist dazu ausgelegt mindestens ein Drehfeld zu erzeugen, bei dem die Polpaarzahl veränderbar ist. Alternativ oder zusätzlich kann der Stator 21 dazu ausgelegt sein mehrere Drehfelder zu erzeugen, bei denen die Polpaarzahl nicht veränderbar ist. Der Stator 21 weist mindestens drei erste Leiterabschnitte 23 auf. Die zweiten Leiterabschnitte 24 sind nicht dargestellt. Die ersten Leiterabschnitte 23 sind jeweils dazu ausgelegt mit einer jeweils eigenen elektrischen Phase versorgt zu werden. Dazu sind die ersten Leiterabschnitte 23 jeweils mit einer eigenen Halbbrücke 27 verbunden. Die Halbbrücken 27 bilden eine Leistungselektronik 51 des elektrischen Antriebs 20.

In Figur 17 ist ein Ersatzschaltbild des elektrischen Antriebs 20 gemäß einem weiteren Ausführungsbeispiel gezeigt. Der Stator 21 weist ein erstes Kurzschlussmittel 25 und ein zweites Kurzschlussmittel 26 auf. Mit dem ersten Kurzschlussmittel 25 sind erste Leiterabschnitte 23 elektrisch verbunden. Mit dem zweiten Kurzschlussmittel 26 sind zweite Leiterabschnitte 24 elektrisch verbunden. Das erste Kurzschlussmittel 25 und das zweite Kurzschlussmittel 26 bilden jeweils einen elektrischen Sternpunkt. Außerdem sind das erste Kurzschlussmittel 25 und das zweite Kurzschlussmittel 26 elektrisch voneinander isoliert. Jeder der ersten Leiterabschnitte 23 und jeder der zweiten Leiterabschnitte 24 ist mit einer eigenen Halbbrücke 27 verbunden. Die den ersten Leiterabschnitten 23 zugeordneten Halbbrücken 27 sind parallel zueinander geschaltet. Die den zweiten Leiterabschnitten 24 zugeordneten Halbbrücken 27 sind ebenfalls parallel zueinander geschaltet. Die Anordnung der ersten Leiterabschnitte 23 und der zweiten Leiterabschnitte 24 entlang des Umfangs des Stators 21 ist beliebig. Das erste Kurzschlussmittel 25 und das zweite Kurzschlussmittel 26 weisen jeweils einen elektrischen Anschluss 28 zur externen Kontaktierung auf. Die elektrischen Anschlüsse 28 sind elektrisch mit einem Transformator 32 verbunden. Der Transformator 32 weist einen ersten ausgangsseitigen Kontakt 48 auf, welcher elektrisch mit dem ersten Kurzschlussmittel 25 verbunden ist. Weiter weist der Transformator 32 einen zweiten ausgangsseitigen Kontakt 49 auf, welcher elektrisch mit dem zweiten Kurzschlussmittel 26 verbunden ist. Der Transformator 32 ist nicht Teil des elektrischen Antriebs 20. Beispielsweise ist der Transformator 32 ein Bestandteil eines Ausführungsbeispiels eines Versorgungssystems 46 und an eine Energiequelle angeschlossen.

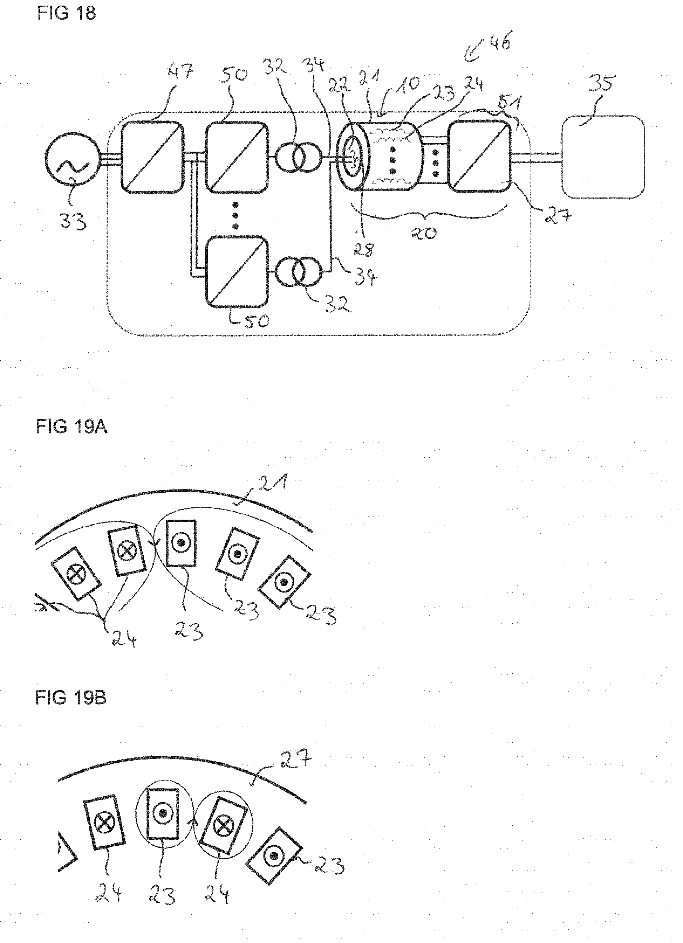

In Figur 18 ist schematisch ein Versorgungssystem 46 für den elektrischen Antrieb 20 gemäß einem Ausführungsbeispiel gezeigt. Das Versorgungssystem 46 weist den elektrischen Antrieb 20 mit der elektrischen Maschine 10 und der Leistungselektronik 51 auf. Die elektrische Maschine 10 weist den Stator 21 mit dem Rotor 22 und die an die ersten und zweiten Leiterabschnitte 23, 24 angeschlossenen Halbbrücken 27 auf. Das Versorgungssystem 46 weist außerdem eine Batterie 35 auf, welche über die Halbbrücken 27 elektrisch mit dem elektrischen Antrieb 20 verbunden ist. Bei der Batterie 35 kann es sich um die erste Stromversorgungseinheit 30 handeln. Das Versorgungssystem 46 weist weiter einen Transformator 32 auf, welcher an eine Energiequelle 33 angeschlossen ist. Bei der Energiequelle 33 handelt es sich um eine Wechselspannungsquelle. Des Weiteren weist das Versorgungssystem 46 eine lösbare elektrische Verbindung 34 zwischen dem Transformator 32 und dem ersten Kurzschlussmittel 25 des elektrischen Antriebs 20 und eine lösbare elektrische Verbindung 34 zwischen dem Transformator 32 und dem zweiten Kurzschlussmittel 26 des elektrischen Antriebs 20 auf. Somit ist der elektrische Antrieb 20 zwischen dem Transformator 32 und der Batterie 35 angeordnet. Die lösbaren elektrischen Verbindungen 34 zwischen dem Transformator 32 und dem elektrischen Antrieb 20 sind dazu ausgelegt elektrisch mit den elektrischen Anschlüssen 28 des ersten Kurzschlussmittels 25 und des zweiten Kurzschlussmittels 26 verbunden zu werden. Das Versorgungssystem 46 weist weiter einen ersten Wandler 47 und einen zweiten Wandler 50 auf. Der erste Wandler 47 wandelt die von der Energiequelle 33 bereitgestellte Wechselspannung in eine Gleichspannung um (ACDC-Wandler). Der zweite Wandler 50 wandelt die Gleichspannung in eine Wechselspannung für den Transformator 32 um (DCAC-Wandler). Insgesamt kann das Versorgungssystem 46 eine Vielzahl von Transformatoren 32, ersten Wandlern 47 und zweiten Wandlern 50 aufweisen, was durch Punkte dargestellt ist. Dabei ist jeder der Transformatoren 32 über eine lösbare elektrische Verbindung 34 mit einem ersten Kurzschlussmittel 25 und mit einem zweiten Kurzschlussmittel 26 des elektrischen Antriebs 20 verbunden. Die Transformatoren 32 sind parallel zueinander geschaltet. Da der elektrische Antrieb 20 mehrere erste Kurzschlussmittel 25 und mehrere zweite Kurzschlussmittel 26 aufweisen kann, können vorteilhafterweise mehrere Transformatoren 32 mit dem elektrischen Antrieb 20 verbunden werden. Dies ermöglicht die Übertragung einer großen Leistung an die Batterie 35.

Der elektrische Antrieb 20 und die Batterie 35 können in einem Fahrzeug oder einem Flugzeug angeordnet sein. Die übrigen Bestandteile des Versorgungssystems 46 können außerhalb des Fahrzeugs oder Flugzeugs, beispielsweise in einer externen Ladevorrichtung, angeordnet sein.

In Figur 18 ist weiter gezeigt, dass der elektrische Antrieb 20 zum Laden der Batterie 35 verwendet werden kann. Dazu wird durch die Energiequelle 33 eine Wechselspannung zugeführt. Die Wechselspannung wird durch den elektrischen Antrieb 20 gleichgerichtet. Dies geschieht, indem der Transformator 32 elektrisch mit dem ersten Kurzschlussmittel 25 und dem zweiten Kurzschlussmittel 26 verbunden wird. Somit werden die ersten Leiterabschnitte 23 und die zweiten Leiterabschnitte 24 mit der Wechselspannung gespeist. Die Wechselspannung wird unter Verwendung der Halbbrücken 27 gleichgerichtet. Anschließend wird die an die Halbbrücken 27 angeschlossene Batterie 35 mit der vom elektrischen Antrieb 20 bereitgestellten Gleichspannung gespeist. Somit kann die Batterie 35 effizient geladen werden.

In Figur 18 ist außerdem gezeigt, dass der elektrische Antrieb 20 zur Versorgung eines Energieverbrauchers 52 mit einer Wechselspannung verwendet werden kann. Dazu wird dem elektrischen Antrieb 20 eine Gleichspannung durch die Batterie 35 zugeführt. Die Gleichspannung wird durch den elektrischen Antrieb 20 unter Verwendung der Halbbrücken 27 in eine Wechselspannung umgerichtet. Anschließend wird der Energieverbraucher 52 mit der bereitgestellten Wechselspannung gespeist. Dazu kann der Energieverbraucher 52 direkt mit dem ersten Kurzschlussmittel 25 und dem zweiten Kurzschlussmittel 26 oder mit dem Transformator 32 verbunden sein. In diesem Fall kann es sich bei der in Figur 18 gezeigten Energiequelle 33 um den Energieverbraucher 52 handeln.

In Figur 19A ist ein Ausschnitt durch einen Querschnitt durch den Stator 21 gemäß einem weiteren Ausführungsbeispiel gezeigt. Dabei sind drei erste Leiterabschnitte 23 direkt nebeneinander angeordnet. Außerdem sind drei zweite Leiterabschnitte 24 direkt nebeneinander angeordnet. Der Ausschnitt durch den Querschnitt durch den Stator 21 ist für die Situation gezeigt, dass der elektrische Antrieb 20 zum Laden der Batterie 35 verwendet wird. Dabei fließt der Strom zum Laden der Batterie 35 in den ersten Leiterabschnitten 23 in die gleiche Richtung. In den zweiten Leiterabschnitten 24 fließt der Strom in die entgegengesetzte Richtung im Vergleich zu den ersten Leiterabschnitten 23. Dabei entstehen Streufelder, welche mit einer Linie um die ersten und zweiten Leiterabschnitte 23, 24 herum angedeutet sind.

In Figur 19B ist ein Ausschnitt durch einen Querschnitt durch den Stator 21 gemäß einem weiteren Ausführungsbeispiel gezeigt. Die ersten Leiterabschnitte 23 und die zweiten Leiterabschnitte 24 sind alternierend entlang des Umfangs des Stators 21 angeordnet. Das bedeutet, dass während der Verwendung des elektrischen Antriebs 20 zum Laden der Batterie 35, Strom benachbarter Leiterabschnitte 23, 24 in entgegengesetzte Richtungen fließt. Dadurch sind die Streufelder wesentlich kleiner als in dem in Figur 19A gezeigten Ausführungsbeispiel. Bei kleineren Streufeldern ist der Wirkungsgrad des Transformators 32 vorteilhafterweise vergrößert. Somit kann insgesamt eine größere Leistung übertragen werden. Dieser Aufbau des Stators 21 ist bei verteilten elektrischen Wicklungen nicht möglich, da bei diesen der Strom in benachbarten Leitern, wie in Figur 19A gezeigt, in die gleiche Richtung fließt.

Bezugszeichenliste

**[0110]**

　　10: elektrische Maschine
　　20: elektrischer Antrieb
　　21: Stator
　　22: Rotor
　　23: erster Leiterabschnitt
　　24: zweiter Leiterabschnitt
　　25: erstes Kurzschlussmittel
　　26: zweites Kurzschlussmittel
　　27: Halbbrücke
　　28: elektrischer Anschluss
　　29: Nut
　　30: erste Stromversorgungseinheit
　　31: zweite Stromversorgungseinheit
　　32: Transformator
　　33: Energiequelle
　　34: elektrische Verbindung
　　35: Batterie
　　36: elektrische Wicklung
　　37: Stab
　　38: erste Seite
　　39: Statorblechpaket
　　40: zweite Seite
　　41: drittes Kurzschlussmittel
　　42: dritter Leiterabschnitt
　　43: Ausnehmung
　　44: Schalter
　　45: dritte Stromversorgungseinheit
　　46: Versorgungssystem
　　47: erster Wandler
　　48: erster ausgangsseitiger Kontakt
　　49: zweiter ausgangsseitiger Kontakt
　　50: zweiter Wandler
　　51: Leistungselektronik

　　52: Energieverbraucher

**Patentansprüche**

1. Elektrischer Antrieb (20), mit:

　　- einer elektrischen Maschine (10), umfassend:
　　- einem Stator (21) und einem beweglich zum Stator (21) gelagerten Rotor (22), wobei
　　- der Stator (21) mindestens zwei erste Leiterabschnitte (23) und mindestens zwei zweite Leiterabschnitte (24) aufweist,
　　- der Stator (21) mindestens ein erstes Kurzschlussmittel (25) und mindestens ein zweites Kurzschlussmittel (26) aufweist,
　　- die ersten Leiterabschnitte (23) elektrisch mit dem ersten Kurzschlussmittel (25) verbunden sind, und
　　- die zweiten Leiterabschnitte (24) elektrisch mit dem zweiten Kurzschlussmittel (26) verbunden sind, **gekennzeichnet dadurch, dass**
　　- die ersten Leiterabschnitte (23) und die zweiten Leiterabschnitte (24) jeweils dazu ausgelegt sind mit einer jeweils eigenen elektrischen Phase versorgt zu werden, und
　　- das erste Kurzschlussmittel (25) und das zweite Kurzschlussmittel (26) entlang einer Rotationsachse des Rotors (22) nebeneinander angeordnet sind.

2. Elektrischer Antrieb (20) gemäß dem vorherigen Anspruch, bei dem die ersten Leiterabschnitte (23) und die zweiten Leiterabschnitte (24) jeweils mit einer eigenen Halbbrücke (27) verbunden sind.

3. Elektrischer Antrieb (20) gemäß einem der vorherigen Ansprüche, bei dem zwischen dem ersten Kurzschlussmittel (25) und dem zweiten Kurzschlussmittel (26) ein elektrisch isolierendes Material angeordnet ist.

4. Elektrischer Antrieb (20) gemäß einem der vorherigen Ansprüche, bei dem die ersten Leiterabschnitte (23) und die zweiten Leiterabschnitte (24) alternierend entlang des Umfangs des Stators (21) angeordnet sind.

5. Elektrischer Antrieb (20) gemäß einem der vorherigen Ansprüche, bei dem das erste Kurzschlussmittel (25) und das zweite Kurzschlussmittel (26) in einem Querschnitt durch die elektrische Maschine (10) nebeneinander angeordnet sind.

6. Elektrischer Antrieb (20) gemäß einem der vorherigen Ansprüche, bei dem die Anzahl der ersten Leiterabschnitte (23) gleich der Anzahl der zweiten Leiterabschnitte (24) oder verschieden von der Anzahl der zweiten Leiterabschnitte (24) ist.

7. Elektrischer Antrieb (20) gemäß einem der vorherigen Ansprüche, bei dem das erste Kurzschlussmittel (25) und das zweite Kurzschlussmittel (26) jeweils einen elektrischen Sternpunkt bilden.

8. Elektrischer Antrieb (20) gemäß einem der vorherigen Ansprüche, bei dem das erste Kurzschlussmittel (25) und das zweite Kurzschlussmittel (26) jeweils einen elektrischen Anschluss (28) zur externen Kontaktierung aufweisen.

9. Elektrischer Antrieb (20) gemäß einem der vorherigen Ansprüche, bei dem die ersten Leiterabschnitte (23) und die zweiten Leiterabschnitte (24) jeweils mindestens einen elektrisch leitfähigen Stab (37) aufweisen, wobei die Stäbe (37) in Nuten (29) des Stators (21) angeordnet sind.

10. Elektrischer Antrieb (20) gemäß einem der vorherigen Ansprüche, bei dem der Stator (21) dazu ausgelegt ist mindestens ein Drehfeld zu erzeugen, bei dem die Polpaarzahl veränderbar ist und/oder der Stator (21) dazu ausgelegt ist mehrere Drehfelder zu erzeugen, bei denen die Polpaarzahl nicht veränderbar ist.

11. Elektrischer Antrieb (20) gemäß einem der vorherigen Ansprüche, bei dem die ersten Leiterabschnitte (23) mit einer ersten Stromversorgungseinheit (30) verbunden sind und die zweiten Leiterabschnitte (24) mit einer zweiten Stromversorgungseinheit (31) verbunden sind.

12. Versorgungssystem (46) für den elektrischen Antrieb (20) gemäß einem der vorherigen Ansprüche, das Versorgungssystem (46) umfassend:

    - den elektrischen Antrieb (20) gemäß einem der vorherigen Ansprüche,
    - einen Transformator (32), welcher an eine Energiequelle (33) angeschlossen ist,
    - eine lösbare elektrische Verbindung (34) zwischen dem Transformator (32) und dem erstem Kurzschlussmittel (25),
    - eine lösbare elektrische Verbindung (34) zwischen dem Transformator (32) und dem zweitem Kurzschlussmittel (26), und
    - eine Batterie (35), wobei
    - der elektrische Antrieb (20) zwischen dem Transformator (32) und der Batterie (35) angeordnet ist.

13. Verfahren zum Betreiben eines elektrischen Antriebs (20), mit den folgenden Schritten:

    - Zuführen einer Wechselspannung durch eine Energiequelle (33),
    - Gleichrichten der Wechselspannung durch den elektrischen Antrieb (20), und
    - Speisen einer Batterie (35) mit einer vom elektrischen Antrieb (20) bereitgestellten Gleichspannung wobei der elektrische Antrieb (20) ein elektrischer Antrieb gemäß Anspruch 1 ist.

14. Verfahren zum Betreiben eines elektrischen Antriebs (20), mit den folgenden Schritten:

    - Zuführen einer Gleichspannung durch eine Batterie (35),
    - Umrichten der Gleichspannung in eine Wechselspannung durch den elektrischen Antrieb (20),
    - Speisen eines Energieverbrauchers (52) mit der vom elektrischen Antrieb (20) bereitgestellten Wechselspannung, wobei der elektrische Antrieb (20) ein elektrischer Antrieb gemäß Anspruch 1 ist.

**Claims**

1. An electric drive (20), comprising:

    - an electric machine (10), comprising:
    - a stator (21) and a rotor (22) mounted so as to be movable with respect to the stator (21), wherein
    - the stator (21) comprises at least two first conductor sections (23) and at least two second conductor sections (24),
    - the stator (21) comprises at least one first short-circuiting means (25) and at least one second short-circuiting means (26),
    - the first conductor sections (23) are electrically connected to the first short-circuiting means (25), and
    - the second conductor sections (24) are electrically connected to the second short-circuiting means (26), **characterized in that**
    - the first conductor sections (23) and the second conductor sections (24) are each designed to be supplied with a separate electric phase, and
    - the first short-circuiting means (25) and the second short-circuiting means (26) are arranged side by side along an axis of rotation of the rotor (22).

2. Electric drive (20) according to the preceding claim, in which the first conductor sections (23) and the second conductor sections (24) are each connected to a separate half-bridge (27).

3. Electric drive (20) according to any one of the preceding claims, in which an electrically insulating material is arranged between the first short-circuiting means (25) and the second short-circuiting means (26).

4. Electric drive (20) according to any one of the preceding claims, in which the first conductor sections (23) and the second conductor sections (24) are arranged alternately along the circumference of the stator (21).

5. Electric drive (20) according to any one of the preceding claims, in which the first short-circuiting means (25) and the second short-circuiting means (26) are arranged side by side in a cross-section through the electric machine (10).

6. Electric drive (20) according to any one of the preceding claims, in which the number of the first conductor sections (23) is equal to the number of the second conductor sections (24) or different from the number of the second conductor sections (24).

7. Electric drive (20) according to any one of the preceding claims, in which the first short-circuiting means (25) and the second short-circuiting means (26) each form an electric star point.

8. Electric drive (20) according to any one of the preceding claims, in which the first short-circuiting means (25) and the second short-circuiting means (26) each have an electrical terminal (28) for external contacting.

9. Electric drive (20) according to any one of the preceding claims, in which the first conductor sections (23) and the second conductor sections (24) each comprise at least one electrically conductive rod (37), the rods (37) being arranged in slots (29) of the stator (21).

10. Electric drive (20) according to any one of the preceding claims, in which the stator (21) is designed to generate at least one rotating field in which the number of pole pairs is variable and/or the stator (21) is designed to generate a plurality of rotating fields in which the number of pole pairs is not variable.

11. Electric drive (20) according to any one of the preceding claims, in which the first conductor sections (23) are connected to a first power supply unit (30) and the second conductor sections (24) are connected to a second power supply unit (31).

12. A supply system (46) for the electric drive (20) according to any one of the preceding claims, the supply system (46) comprising:

   - the electric drive (20) according to any one of the preceding claims,
   - a transformer (32) connected to a power source (33),
   - a detachable electrical connection (34) between the transformer (32) and the first short-circuiting means (25),
   - a detachable electrical connection (34) between the transformer (32) and the second short-circuiting means (26), and
   - a battery (35), wherein
   - the electric drive (20) is arranged between the transformer (32) and the battery (35).

13. A method of operating an electric drive (20), comprising the following steps:

   - supplying an AC voltage by a power source (33),
   - rectifying the AC voltage by the electric drive (20), and
   - supplying a battery (35) with a DC voltage provided by the electric drive (20), wherein
   - the electric drive (20) comprises an electric machine (10), which comprises a stator (21) and a rotor (22) mounted so as to be movable with respect to the stator (21),
   - the stator (21) comprises at least two first conductor sections (23) and at least two second conductor sections (24),
   - the stator (21) comprises at least one first short-circuiting means (25) and at least one second short-circuiting means (26),
   - the first conductor sections (23) are electrically connected to the first short-circuiting means (25),
   - the second conductor sections (24) are electrically connected to the second short-circuiting means (26),
   - the first conductor sections (23) and the second conductor sections (24) are each designed to be supplied with a separate electric phase, and
   - the first short-circuiting means (25) and the second short-circuiting means (26) are arranged side by side along an axis of rotation of the rotor (22).

14. A method of operating an electric drive (20), comprising the following steps:

   - supplying a DC voltage by a battery (35),
   - converting the DC voltage to an AC voltage by the electric drive (20),
   - supplying the AC voltage provided by the electric drive (20) to an electric load (52), wherein
   - the electric drive (20) comprises an electric machine (10), which comprises a stator (21) and a rotor (22) mounted so as to be movable with respect to the stator (21),

- the stator (21) comprises at least two first conductor sections (23) and at least two second conductor sections (24),
- the stator (21) comprises at least one first short-circuiting means (25) and at least one second short-circuiting means (26),
- the first conductor sections (23) are electrically connected to the first short-circuiting means (25),
- the second conductor sections (24) are electrically connected to the second short-circuiting means (26),
- the first conductor sections (23) and the second conductor sections (24) are each designed to be supplied with a separate electric phase, and
- the first short-circuiting means (25) and the second short-circuiting means (26) are arranged side by side along an axis of rotation of the rotor (22).

**Revendications**

1. Entraînement électrique (20), avec :

- une machine électrique (10), comprenant :
- un stator (21) et un rotor (22) monté de manière mobile par rapport au stator (21), dans lequel
- le stator (21) présente au moins deux premières sections conductrices (23) et au moins deux deuxièmes sections conductrices (24),
- le stator (21) présente au moins un premier moyen de court-circuit (25) et au moins un deuxième moyen de court-circuit (26),
- les premières sections conductrices (23) sont électriquement reliées au premier moyen de court-circuit (25), et
- les deuxièmes sections conductrices (24) sont électriquement reliées au deuxième moyen de court-circuit (26), **caractérisé en ce que**
- les premières sections conductrices (23) et les deuxièmes sections conductrices (24) sont respectivement conçues pour être respectivement alimentées avec une phase électrique propre, et
- le premier moyen de court-circuit (25) et le deuxième moyen de court-circuit (26) sont disposés côte à côte le long d'un axe de rotation du rotor (22).

2. Entraînement électrique (20) selon la revendication précédente, où les premières sections conductrices (23) et les deuxièmes sections conductrices (24) sont reliées respectivement à un demi-pont (27) propre.

3. Entraînement électrique (20) selon l'une des revendications précédentes, où un matériau électriquement isolant est disposé entre le premier moyen de court-circuit (25) et le deuxième moyen de court-circuit (26).

4. Entraînement électrique (20) selon l'une des revendications précédentes, où les premières sections conductrices (23) et les deuxièmes sections conductrices (24) sont disposées en alternance le long de la périphérie du stator (21).

5. Entraînement électrique (20) selon l'une des revendications précédentes, où le premier moyen de court-circuit (25) et le deuxième moyen de court-circuit (26) sont disposés côte à côte dans une section transversale à travers la machine électrique (10).

6. Entraînement électrique (20) selon l'une des revendications précédentes, où le nombre des premières sections conductrices (23) est égal au nombre des deuxièmes sections conductrices (24) ou est différent du nombre des deuxièmes sections conductrices (24).

7. Entraînement électrique (20) selon l'une des revendications précédentes, où le premier moyen de court-circuit (25) et le deuxième moyen de court-circuit (26) forment respectivement un point neutre électrique.

8. Entraînement électrique (20) selon l'une des revendications précédentes, où le premier moyen de court-circuit (25) et le deuxième moyen de court-circuit (26) présentent respectivement un raccordement électrique (28) pour la mise en contact externe.

9. Entraînement électrique (20) selon l'une des revendications précédentes, où les premières sections conductrices (23) et les deuxièmes sections conductrices (24) présentent respectivement au moins une tige électriquement conductrice (37), dans lequel les tiges (37) sont disposées dans des rainures (29) du stator (21).

10. Entraînement électrique (20) selon l'une des revendications précédentes, où le stator (21) est conçu pour générer au moins un champ tournant, où le nombre de paires de pôles peut être modifié et/ou le stator (21) est conçu pour générer plusieurs champs tournants, où le nombre de paires de pôles ne peut pas être modifié.

11. Entraînement électrique (20) selon l'une des revendications précédentes, où les premières sections conductrices (23) sont reliées à une première unité d'alimentation électrique (30) et les deuxièmes sections conductrices (24) sont raccordées à une deuxième unité d'alimentation électrique (31).

12. Système d'alimentation (46) pour l'entraînement électrique (20) de l'une des revendications précédentes, le système d'alimentation (46) comprenant :

- l'entraînement électrique (20) selon l'une des revendications précédentes,
- un transformateur (32), lequel est raccordé à une source d'énergie (33),
- une liaison électrique amovible (34) entre le transformateur (32) et le premier moyen de court-circuit (25),
- une liaison électrique amovible (34) entre le transformateur (32) et le deuxième moyen de court-circuit (26), et
- une batterie (35), dans lequel
- l'entraînement électrique (20) est disposé entre le transformateur (32) et la batterie (35).

13. Procédé pour faire fonctionner un entraînement électrique (20), avec les étapes suivantes :

- l'amenée d'une tension alternative par l'intermédiaire d'une source d'énergie (33),
- le redressement de la tension alternative par l'entraînement électrique (20), et
- l'alimentation d'une batterie (35) avec une tension continue fournie par l'entraînement électrique (20), dans lequel l'entraînement électrique (20) est un entraînement électrique selon la revendication 1.

14. Procédé pour faire fonctionner un entraînement électrique (20), avec les étapes suivantes :

- l'amenée d'une tension continue par une batterie (35),
- la conversion de la tension continue en une tension alternative par l'entraînement électrique (20),
- l'alimentation d'un consommateur d'énergie (52) avec la tension alternative fournie par l'entraînement électrique (20),

dans lequel l'entraînement électrique (20) est un entraînement électrique selon la revendication 1.

FIG 1A

FIG 1B

FIG 2A

FIG 2B

FIG 3A

FIG 3B

FIG 4

FIG 5

FIG 6A

FIG 6B

FIG 7

FIG 8

FIG 9

FIG 10A

FIG 10B

FIG 11

FIG 12

FIG 13

FIG 14

27

~30

27

27

FIG 15

27

~44

~44

FIG 16

FIG 17

FIG 18

FIG 19A

FIG 19B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017116145 B3
- US 2016028284 A1
- DE 102005032965 A1
- US 20160173019 A1